# EUROPEAN PATENT APPLICATION

(11) **EP 4 460 048 A1**
(43) Date of publication of application: **06.11.2024**
(21) Application number: 23746007.6
(22) Date of filing: 13.01.2023
(51) Int. Cl.: H04W 4/029

(54) **INFORMATION UPDATING METHOD AND COMMUNICATION APPARATUS**

(30) Priority: 29.01.2022 CN 202210111696
(71) Applicant: Huawei Technologies Co., Ltd., Shenzhen, Guangdong 518129 (CN)
(72) Inventor: WU, Xiaoning, Shenzhen, Guangdong 518129 (CN); HU, Xingxing, Shenzhen, Guangdong 518129 (CN); CHEN, Qucai, Shenzhen, Guangdong 518129 (CN); ZONG, Zaifeng, Shenzhen, Guangdong 518129 (CN); GENG, Tingting, Shenzhen, Guangdong 518129 (CN)
(74) Representative: Körber, Martin Hans
(86) International application number: PCT/CN2023/072088
(87) International publication number: WO 2023/143125

(57) **Abstract**

This application discloses an information update method and a communication apparatus. In the method, an access network device can sense first information delivered by a core network device, and can determine, based on the first information, first location information reported to the core network device, where the first location information is used to determine a paging area and/or registration area. Because the access network device participates in determining the first location information instead of transparently transmitting only location information reported by a terminal device, this helps determine the appropriate paging area and/or registration area to reduce signaling overheads for paging the terminal device by a network side (for example, the access network device or the core network device), and further helps reduce registration update signaling overheads.

## Description

This application claims priority to Chinese Patent Application No. 202210111696.X, filed with the China National Intellectual Property Administration on January 29, 2022 and entitled "INFORMATION UPDATE METHOD AND COMMUNICATION APPARATUS", which is incorporated herein by reference in its entirety.

### TECHNICAL FIELD

Embodiments of this application relate to the communication field, and in particular, to an information update method and a communication apparatus.

### BACKGROUND

When a terminal device moves out of a registration area in which the terminal device is currently located, the terminal device needs to trigger a registration update procedure to report a current location of the terminal device to a core network, so that the core network can learn of a location change of the terminal device, and configure a new paging area or registration area for the terminal device, to subsequently perform paging management and service processing (for example, charging policy selection and handover management) on the terminal device.

However, the terminal device reports location information of the terminal device to the core network only after triggering the registration update procedure. Consequently, the core network cannot update a paging area or a registration area of the terminal device in a timely manner based on the location information of the terminal device.

### SUMMARY

This application provides an information update method and a communication apparatus.

According to a first aspect, this application provides an information update method, and the method relates to an access network device and a core network device. In the method, the access network device receives first information from the core network device, where the first information indicates the access network device to send first location information of a terminal device to the core network device. Then, the access network device determines the first location information based on the first information. Then, the access network device sends the first location information to the core network device, where the first location information is used by the core network device to determine a paging area and/or registration area of the terminal device.

It should be understood that, that the first location information is used by the core network device to determine the paging area and/or registration area of the terminal device may be understood as that the core network device determines, based on the first location information, the registration area of the terminal device and/or the area for paging the terminal device.

In this application, because the access network device can report, to the core network device as indicated by the core network device, the location information that is of the terminal device and that is determined by the access network device, the core network device can obtain the location information of the terminal device in a timely manner and determine the paging area or the registration area of the terminal device based on the location information of the terminal device, without waiting for the terminal device to initiate a registration update procedure, to improve timeliness and accuracy of paging management and/or registration management on the terminal device. In addition, the core network device may obtain the location information of the terminal device without the registration update procedure, and the terminal device does not need to initiate an unnecessary registration update procedure to report the location information. This helps reduce signaling overheads caused by triggering the registration update procedure by the terminal device.

Optionally, this application is applicable to a satellite communication scenario. Optionally, the access network device is a satellite.

In a possible implementation, the first location information includes a target location, and the target location is a location that is of the terminal device and that is obtained before the registration update procedure is triggered based on a first reference location and a first distance threshold.

The first reference location and the first distance threshold are parameters that are configured by the core network device for the terminal device and that are used to trigger the registration update procedure. For example, before the core network device sends the first information to the access network device, the core network device has configured the first reference location and the first distance threshold for the terminal device. When a distance between a location of the terminal device and the first reference location reaches the first distance threshold, the terminal device triggers the registration update procedure. The registration update procedure includes: The terminal device updates the first reference location by using the current location of the terminal device, and the terminal device sends the current location of the terminal device to the core network device through the access network device, so that the core network device updates the first reference location by using the current location of the terminal device.

In this implementation, the access network device can determine, before the terminal device triggers the registration update procedure, the target location based on the first information from the core network device, and send the target location to the core network device in a form of the first location information, so that the core network device can determine the paging area and/or registration area based on the received target location. Because the target location is determined before the terminal device triggers the registration update procedure based on the originally configured first reference location and the first distance threshold, the core network device can obtain the target location of the terminal device before initiating the registration update procedure, so that the core network device determines a new registration area based on the target location before the terminal device triggers the registration update procedure. As a result, an old registration area determined based on the first reference location and the first distance threshold is invalid. Therefore, the terminal device does not trigger the registration update procedure based on the first reference location and the first distance threshold. This helps reduce signaling overheads caused when the terminal device triggers the registration update procedure based on the first reference location and the first distance threshold. In addition, the target location of the terminal device can be reported to the core network device in a timely manner before the registration update procedure is triggered, so that the core network device accurately and timely learns of a current location of the terminal device. Therefore, this helps the core network device determine a more accurate paging area and/or registration area, and helps the core network device perform paging management and/or registration management on the terminal device more accurately.

In a possible implementation, a distance between the target location and the first reference location is less than the first distance threshold.

This implementation provides that a feature satisfied by the target location indicated by the first location information sent by the access network device to the core network device is that the distance between the target location and the first reference location is less than the first distance threshold. According to a registration update rule configured by the core network device, the terminal device triggers the registration update procedure only when the distance between the location of the terminal device and the first reference location reaches the first distance threshold. However, in this implementation, it is determined that the distance between the target location and the first reference location is less than the first distance threshold, in other words, a trigger condition of the registration update procedure is not satisfied. Therefore, when the access network device reports the target location to the core network device, the terminal device does not trigger the registration update procedure, and can further provide the location of the terminal device to the core network device. Therefore, this helps reduce frequency of triggering a registration update by the terminal device, and further helps the core network device obtain the target location in a timely manner and determine the paging area and/or registration area based on the target location. Therefore, this helps the core network device determine a more accurate paging area and/or registration area, and further helps the core network device perform paging management and/or registration management on the terminal device more accurately.

In a possible implementation, the paging area and/or registration area of the terminal device are/is represented by using a second reference location and/or second distance threshold, and the second reference location and the second distance threshold are determined based on the first location information. It may alternatively be understood that the core network device can determine the second reference location and/or second distance threshold based on the first location information, and then the core network device determines the paging area and/or registration area of the terminal device based on the second reference location and/or second distance threshold.

In this implementation, the registration area and/or paging area are/is represented in a form of a parameter used to trigger the registration update procedure, instead of being represented based on a tracking area code (tracking area code, TAC). Therefore, the registration area and/or paging area can be compatible with a registration update mechanism based on a reference location and a distance threshold, and flexibility of representing the registration area and/or paging area can be improved.

Optionally, the second reference location is obtained by updating the first reference location based on the first location information.

Optionally, the second distance threshold is obtained by updating the first distance threshold based on the first location information.

In addition, because the first location information is determined before the registration update procedure is triggered based on the originally configured first reference location and first distance threshold, the registration area is updated before the registration update procedure is triggered based on the first reference location and the first distance threshold, in other words, the registration update procedure is not triggered based on the first reference location and the first distance threshold. Therefore, this helps reduce frequency of triggering a registration update by the terminal device, and reduce signaling overheads.

In a possible implementation, that the access network device determines the first location information includes: The access network device sends second information to the terminal device based on the first information, where the second information indicates the terminal device to send second location information to the access network device; the access network device receives the second location information from the terminal device, where the second location information includes the target location, and the target location is a location that is of the terminal device and that is determined by the terminal device based on the second information; and the access network device determines the first location information based on the second location information.

In this implementation, the access network device can determine, based on the received first information, the second information that needs to be sent to the terminal device, so that the terminal device determines the target location based on the received second information, and reports the target location of the terminal device to the access network device on an occasion indicated by the second information. This helps make the terminal device and the access network device have a consistent understanding of the target location, so that the terminal device is prevented from triggering an unnecessary registration update procedure, and a signaling waste is avoided.

In a possible implementation, the first information includes first rule information, the first rule information is used to determine that the target location includes a location of the terminal device when a distance between the terminal device and the first reference location reaches a third distance threshold, and the third distance threshold is less than the first distance threshold. For example, the third distance threshold may be a distance threshold A described in the following embodiments.

It should be noted that, in an example of this implementation, the first rule information can indicate that a decision body for determining whether the location of the terminal device satisfies a first rule is the terminal device or the access network device, in other words, the first rule information can indicate that a device that determines whether a distance between the location of the terminal device and the first reference location reaches the third distance threshold is the terminal device or the access network device. For example, the first rule information indicates the access network device to determine, as the target location, the location of the terminal device when the distance between the terminal device and the first reference location reaches the third distance threshold. For another example, the first rule information indicates the terminal device to determine, as the target location, the location of the terminal device when the distance between the terminal device and the first reference location reaches the third distance threshold.

In this example, because the first rule information can indicate a decision body for determining whether the location of the terminal device satisfies the first rule, in other words, before sending the first rule information, the core network device has determined that the terminal device or the access network device determines whether the location of the terminal device satisfies the first rule. Therefore, the core network device can clearly learn of the decision body for obtaining the target location (to be specific, whether the access network device or the terminal device determines whether the location of the terminal device satisfies the first rule), so that the core network device adjusts a value of the third distance threshold based on different decision bodies. In addition, this helps reduce implementation complexity of the terminal device and the access network device.

In addition, in another example of this implementation, the first rule information may alternatively not indicate that a decision body for determining whether the location of the terminal device satisfies a first rule is the terminal device or the access network device determines, but the determining is implemented by the access network device. In other words, after receiving the first rule information, the access network device determines, based on a factor, for example, current network quality, that the access network device serves as a decision body, to be specific, the access network device determines whether a distance between a current location of the terminal device and the first reference location reaches the third distance threshold; or the terminal device serves as a decision body, to be specific, the first rule information is sent to the terminal device, and the terminal device determines whether a distance between a current location of the terminal device and the first reference location reaches the third distance threshold.

In this example, the first rule information specifies only the first rule (to be specific, when the distance between the location of the terminal device and the first reference location reaches the third distance threshold, the location of the terminal device is determined as the target location), but a decision body for determining the first rule is not limited. Therefore, the access network device can determine, based on a factor, for example, network quality, a decision body for obtaining the target location, to help improve flexibility of reporting the target location by the access network device.

In a possible implementation, the access network device serves as the decision body for determining whether the location of the terminal device satisfies the first rule. In this case, the second information includes first indication information, and the first indication information indicates that a location that is of the terminal device and that is determined after the terminal device receives the first indication information is the target location. Specifically, the access network device can obtain a distance between the current location of the terminal device and the first reference location. When the access network device determines, based on the first rule information, that the distance between the location of the terminal device and the first reference location reaches the third distance threshold, the access network device sends the second information to the terminal device.

In this implementation, the access network device determines, based on the first rule information, whether the distance between the location of the terminal device and the first reference location reaches the third distance threshold, and the access network device can send the first indication information to the terminal device when determining that the distance between the location of the terminal device and the first reference location reaches the third distance threshold. Therefore, the terminal device only needs to obtain the current location of the terminal device as the target location based on the first indication information, and the terminal device does not need to determine the distance between the terminal device and the first reference location. Therefore, this helps reduce complexity of the terminal device, and further helps reduce power consumption of the terminal device.

In a possible implementation, the terminal device serves as the decision body for determining whether the location of the terminal device satisfies the first rule. In this case, the second information includes the first rule information.

In this implementation, the access network device can send the first rule information to the terminal device; and when a distance between the terminal device and the first reference location reaches the third distance threshold, the terminal device determines the current location of the terminal device as the target location, and sends the target location to the access network device. The terminal device is easier to determine the location of the terminal device than the access network device. Therefore, this helps improve accuracy of the target location sent by the terminal device to the access network device, and further helps improve accuracy of the target location sent by the access network device to the core network device.

In a possible implementation, the first information includes second rule information, the second rule information is used to determine that the target location includes each location that is of the terminal device and that is sent by the terminal device to the access network device, and the second information includes the second rule information. In this case, the access network device receives each location of the terminal device from the terminal device, and determines, as the target location, each location that is of the terminal device and that is received from the terminal device.

In this implementation, the core network device sends the second rule information to the access network device, so that the access network device learns that each location that is of the terminal device and that is received from the terminal device is the target location. The access network device sends the second rule information to the terminal device, so that the terminal device can learn that the location determined by the terminal device each time is the target location and needs to be sent to the access network device. This helps make the terminal device and the access network device have a consistent understanding of the target location.

In a possible implementation, the first information includes third rule information, and the third rule information is used by the access network device to determine that the target location includes a location that is of the terminal device and that is obtained within a preset time range before the terminal device is released or suspended. In this case, the second information includes first indication information, and the first indication information indicates that a location that is of the terminal device and that is determined after the terminal device receives the first indication information is the target location. Specifically, when the access network device determines, based on the third rule information, that the terminal device needs to be released or suspended, the access network device sends the second information to the terminal device.

In this implementation, before entering a non-connected mode (for example, an inactive mode or an idle mode), the terminal device can report, as indicated by the first indication information of the access network device, a current location of the terminal device as the target location to the core network device. Therefore, the core network device can learn of a geographical location of the terminal device before the terminal device enters the non-connected mode. This helps the core network device more accurately determine a paging area of the terminal device when paging management needs to be performed on the terminal device, to reduce signaling overheads caused by paging. In addition, because the core network device further updates the registration area based on the first indication information indicating the target location, the terminal device does not return, within short time after entering the non-connected mode, to a connected mode because the registration update procedure needs to be triggered. This helps avoid frequent switching between the connected mode and the non-connected mode of the terminal device, to reduce power consumption of the terminal device.

In a possible implementation, the second distance threshold is greater than the first distance threshold.

This implementation provides that the first location information is further used by the core network device to determine the second distance threshold, and the second distance threshold is greater than the first distance threshold. The second distance threshold is greater than the first distance threshold, the registration area determined based on the second distance threshold is larger than the registration area determined based on the first distance threshold. Therefore, it is difficult for the terminal device to trigger the registration update procedure. This helps reduce frequency of triggering the registration update procedure by the terminal device, and prolong a periodicity of triggering the registration update procedure by the terminal device.

In a possible implementation, the first information further includes second indication information, the second information further includes the second indication information, and the second indication information further indicates an access stratum (access stratum, AS) of the terminal device to send the target location to a non-access stratum (non-access stratum, NAS) of the terminal device.

In a conventional technology, the NAS of the terminal device may obtain a current location of the terminal device through a module that can obtain location information, for example, a global positioning system (global positioning system, GPS) or a global navigation satellite system (global navigation satellite system, GNSS). Therefore, the AS of the terminal device does not actively send the location of the terminal device to the NAS of the terminal device. However, in this implementation, the AS of the terminal device can send the obtained location information to the NAS of the terminal device based on the second indication information, instead of obtaining the location information of the terminal device by the NAS of the terminal device, so that the AS of the terminal device has a capability of sending the location information of the terminal device to the access network device. In this way, the target location obtained by the NAS of the terminal device from the AS of the terminal device is consistent with the target location obtained by the access network device from the AS of the terminal device, and the target location obtained by the core network device is consistent with the target location obtained by the NAS of the terminal device.

In a possible implementation, after that the access network device sends the first location information to the core network device, the method further includes: The access network device receives a first paging message from the core network device, where the first paging message includes the second reference location and/or second distance threshold; then the access network device determines, based on the second reference location and/or second distance threshold, a target cell and/or a target beam coverage area in a plurality of cells served by the access network device; and the access network device sends, to the target cell and/or the target beam coverage area, a second paging message used to page the terminal device.

There may be a plurality of cells served by the access network device, and the access network device may select one or more cells from the plurality of cells as the target cell based on the second reference location and/or second distance threshold. For example, the target access network device may select a cell close to the second reference location as the target cell. Optionally, the target access network device may further select one or more beam coverage areas from one or more cells. For example, the target access network device may select a beam coverage area close to the second reference location as the target beam coverage area.

In this embodiment, the access network device can select the target cell and/or the target beam coverage area from the plurality of cells based on the second reference location and/or second distance threshold. Therefore, the access network device may page the terminal device in a small range. Therefore, signaling overheads used for paging can be reduced, air interface resources can be saved, and system performance can be improved.

According to a second aspect, this application provides an information update method. In the method, a terminal device receives second information from an access network device, where the second information indicates the terminal device to send second location information to the access network device; then the terminal device sends the second location information to the access network device; and the terminal device determines a trigger condition of a registration update procedure based on the second location information.

The second location information is used by the access network device to determine the first location information.

It should be understood that the terminal device may first send the second location information to the access network device, and then determine the trigger condition of the registration update procedure based on the second location information; may first determine the trigger condition of the registration update procedure based on the second location information, and then send the second location information to the access network device; or the terminal device may send the second location information to the access network device when determining the trigger condition of the registration update procedure based on the second location information. This is not specifically limited herein.

In this application, the terminal device can determine the second location information based on the second information determined by the access network device, then send the second location information to the access network device, and determine the trigger condition of the registration update procedure based on the second location information. Therefore, this helps make the terminal device and the access network device have a consistent understanding of the second location information, to prevent the terminal device from triggering an unnecessary registration update procedure to report the location information, and reduce signaling overheads.

In a possible implementation, the second location information includes a target location, and the target location is a location that is of the terminal device and that is obtained before the registration update procedure is triggered based on a first reference location and a first distance threshold.

The first reference location and the first distance threshold are parameters that are configured by a core network device for the terminal device and that are used to trigger the registration update procedure. For example, before the terminal device receives the second information from the access network device, the core network device has configured the first reference location and the first distance threshold for the terminal device. Therefore, when a distance between a location of the terminal device and the first reference location reaches the first distance threshold, the terminal device triggers the registration update procedure. The registration update procedure includes: The terminal device updates the first reference location by using the current location of the terminal device, and the terminal device sends the current location of the terminal device to the core network device through the access network device, so that the core network device updates the first reference location by using the current location of the terminal device.

In this implementation, the terminal device can determine the target location before triggering the registration update procedure, and determine the trigger condition of the registration update procedure based on the second location information indicating the target location. It may alternatively be understood that the terminal device modifies the trigger condition of the registration update procedure before triggering the registration update procedure, so that the terminal device does not trigger a registration update based on the original registration update parameters (namely, the first reference location and the first distance threshold). Therefore, this helps reduce frequency of triggering a registration update by the terminal device, and reduce signaling overheads of the registration update.

In a possible implementation, a distance between the target location and the first reference location is less than the first distance threshold.

This implementation provides that a feature satisfied by the target location indicated by the second location information determined by the terminal device is that the distance between the target location and the first reference location is less than the first distance threshold. According to a registration update rule configured by the core network device, the terminal device triggers the registration update procedure only when the distance between the location of the terminal device and the first reference location reaches the first distance threshold. However, in this implementation, it is determined that the distance between the target location and the first reference location is less than the first distance threshold, in other words, the trigger condition of the registration update procedure is not satisfied, and the terminal device does not trigger the registration update procedure. Therefore, this helps reduce frequency of triggering a registration update by the terminal device, and reduce signaling overheads caused by the registration update procedure.

In a possible implementation, that the terminal device determines a trigger condition of a registration update procedure based on the second location information includes: The terminal device determines a second reference location based on the target location, where the second reference location is used to trigger the registration update procedure.

The second reference location is used to update the first reference location.

For example, the terminal device directly replaces the first reference location with the second reference location.

In this implementation, because the terminal device can update the first reference location to the second reference location based on the target location indicated by the second location information, a registration update can be triggered based on the second reference location, and no registration update is triggered based on the first reference location. Because the second location information is determined by the terminal device before the terminal device triggers the registration update procedure based on the originally configured first reference location and first distance threshold, a periodicity of triggering the registration update procedure by the terminal device may be prolonged, to help reduce frequency of triggering a registration update by the terminal device and reduce signaling overheads.

In a possible implementation, the second information includes first rule information, the first rule information is used to determine that the target location includes a location of the terminal device when a distance between the terminal device and the first reference location reaches a third distance threshold, and the third distance threshold is less than the first distance threshold. When a distance between a current location of the terminal device and the first reference location reaches the third distance threshold, the terminal device determines the current location of the terminal device as the target location.

In this implementation, the access network device can send the first rule information to the terminal device; and when a distance between the terminal device and the first reference location reaches the third distance threshold, the terminal device determines the current location of the terminal device as the target location, and sends the target location to the access network device. The terminal device is easier to determine the location of the terminal device than the access network device. Therefore, this helps improve accuracy and timeliness of the target location sent by the terminal device to the access network device, and further helps improve accuracy and timeliness of the target location sent by the access network device to the core network device.

In a possible implementation, the second information includes first indication information, and the first indication information indicates that a location that is of the terminal device and that is determined after the terminal device receives the first indication information is the target location. In this case, the terminal device determines, as the target location, the location that is of the terminal device and that is determined after receiving the first indication information.

In this implementation, the terminal device obtains the current location of the terminal device as the target location based only on the first indication information, the terminal device does not need to determine a distance between the terminal device and the first reference location, and the terminal device does not need to determine whether the terminal device needs to be released or suspended. Therefore, this helps reduce complexity of the terminal device, and further helps reduce power consumption of the terminal device.

In a possible implementation, the second information includes second rule information, and the second rule information is used to determine that the target location includes each location that is of the terminal device and that is sent by the terminal device to the access network device.

In this implementation, the access network device sends the second rule information to the terminal device. This helps the terminal device learn that the access network device determines a location reported by the terminal device to the access network device each time as the target location, and helps the terminal device and the access network device have a consistent understanding of the target location, to prevent the terminal device from triggering an unnecessary registration update procedure, and reduce signaling overheads.

In a possible implementation, that the terminal device determines a second reference location based on the target location includes: An AS of the terminal device sends the target location to a NAS of the terminal device; and the NAS of the terminal device updates the first reference location based on the target location, to obtain the second reference location.

It should be noted that in an actual implementation, the AS of the terminal device may send the target location to the NAS of the terminal device only as indicated by the second indication information, or it may be specified in a protocol that the AS of the terminal device can send the received target location to the NAS of the terminal device.

In a possible implementation, the second information further includes second indication information, and the second indication information further indicates the AS of the terminal device to send the target location to the NAS of the terminal device.

It should be noted that some specific implementations and beneficial effects of this aspect are similar to some implementations of the first aspect. For details, refer to the specific implementations and beneficial effects of the first aspect. Details are not described herein again.

According to a third aspect, this application provides an information update method. In the method, a core network device sends first information to an access network device that serves a terminal device, where the first information indicates the access network device to send first location information of the terminal device to the core network device. Then, the core network device receives the first location information from the access network device. Then, the core network device determines a paging area and/or registration area of the terminal device based on the first location information.

In this embodiment, because the core network device can indicate the access network device to report the first location information to the core network device based on the first information, the core network device may obtain location information (for example, the first location information) of the terminal device without depending on a registration update procedure triggered by the terminal device. This helps the core network device obtain the location information of the terminal device in a timely manner and determine the paging area or the registration area of the terminal device based on the location information of the terminal device, to improve timeliness and accuracy of paging management and/or registration management on the terminal device. In addition, the core network device can determine the appropriate registration area based on the first location information, to enable the terminal device not to trigger a registration update in the registration area determined by the core network device. Therefore, this helps reduce signaling overheads generated when a location of the terminal device is reported through the registration update. In addition, this helps the core network device determine the appropriate paging area based on the first location information reported by the access network device, so that signaling overheads for paging the terminal device by a network side (for example, the access network device or the core network device) are reduced, and further helps reduce signaling overheads for the registration update.

In a possible implementation, the first location information includes a target location, and the target location is a location that is of the terminal device and that is obtained before the registration update procedure is triggered based on a first reference location and a first distance threshold.

The first reference location and the first distance threshold are configured parameters that are used to trigger the registration update procedure.

In a possible implementation, a distance between the target location and the first reference location is less than the first distance threshold.

In a possible implementation, the paging area and/or registration area of the terminal device are/is represented by using a second reference location and/or second distance threshold, and the second reference location and the second distance threshold are determined based on the first location information.

Specifically, the core network device determines the second reference location and the second distance threshold based on the first location information, and then the core network device determines the paging area and/or registration area of the terminal device based on the second reference location and the second distance threshold.

In this embodiment, the core network device may determine the second reference location based only on the target location, or it may alternatively be understood that the core network device updates the first reference location based on the target location to obtain the second reference location; or the core network device may determine the second reference location and the second distance threshold based on the target location, or it may be understood that the core network device updates the first reference location and the first distance threshold based on the target location to obtain the second reference location and the second distance threshold.

In a possible implementation, the first information includes first rule information, the first rule information is used to determine that the target location includes a location of the terminal device when a distance between the terminal device and the first reference location reaches a third distance threshold, and the third distance threshold is less than the first distance threshold.

In a possible implementation, the first information includes second rule information, and the second rule information is used to determine that the target location includes each location that is of the terminal device and that is sent by the terminal device to the access network device.

In a possible implementation, the first information includes third rule information, and the third rule information is used by the access network device to determine that the target location includes a location that is of the terminal device and that is obtained within a preset time range before the terminal device is released or suspended.

In a possible implementation, the second distance threshold is greater than the first distance threshold.

In a possible implementation, the first information further includes second indication information, and the second indication information indicates an AS of the terminal device to send the target location to a NAS of the terminal device.

In a possible implementation, the method further includes: The core network device determines, based on the second reference location and/or second distance threshold, a target access network device used to page the terminal device; and the core network device sends a first paging message to the target access network device, where the first paging message includes the second reference location and/or second distance threshold.

In a possible implementation, the second reference location and/or second distance threshold are/is used to determine a first geographic area; and that the core network device determines, based on the second reference location and/or second distance threshold, a target access network device used to page the terminal device includes: The core network device determines an access network device located in the first geographic area as the target access network device.

In an implementation of this implementation, if the core network device determines only the second reference location based on the target location, to be specific, the core network device updates only the first reference location to the second reference location but does not update the first distance threshold, the core network device determines the first geographic area based on the second reference location and the first distance threshold. For example, the core network device determines, as the first geographic area, a circular area whose circle center is the second reference location and whose radius is the first distance threshold. For another example, the core network device determines, as the first geographic area, a rectangular area whose geometric center is the second reference location and whose distance from the geometric center to a side of the rectangular area is the first distance threshold.

In another implementation of this implementation, if the core network device determines the second reference location and the second distance threshold based on the target location, to be specific, the core network device updates the first distance threshold to the second distance threshold and updates the first reference location to the second reference location, the core network device determines the first geographic area based on the second reference location and the second distance threshold. For example, the core network device determines, as the first geographic area, a circular area whose circle center is the second reference location and whose radius is the second distance threshold. For another example, the core network device determines, as the first geographic area, a rectangular area whose geometric center is the second reference location and whose distance from the geometric center to a side of the rectangular area is the second distance threshold.

In a possible implementation, location change information and at least one of the second reference location and the second distance threshold are used to determine a second geographic area, and the location change information includes information indicating a movement direction of the terminal device and/or information indicating a movement speed of the terminal device; and that the core network device determines, based on the second reference location and/or second distance threshold, a target access network device used to page the terminal device includes: The core network device determines an access network device located in the second geographic area as the target access network device.

In a possible implementation, the target location is represented by using geographical location information. After that the core network device receives the first location information from the access network device, the method further includes: The core network device determines, based on a first correspondence and the first location information, a tracking area code TAC corresponding to the first location information, where the first correspondence is a correspondence between a geographic area and a TAC.

The first location information may be represented by using geographical location information, and the geographical location information may be longitude and latitude, an administrative region, a country, or the like. The geographic area may be represented by using geographical location information such as latitude and longitude, an administrative region, or a country area. In addition, the geographic area may alternatively be represented by using a grid obtained through division based on longitude and latitude, for example, a grid determined at an interval of 5° in terms of longitude and at an interval of 5° in terms of latitude. After receiving the first location information that indicates the target location, the core network device can determine a geographic area in which the target location is located. Further, the core network device can determine, based on the first correspondence, a TAC corresponding to the geographic area. Therefore, the core network device can determine, based on the first location information, the TAC corresponding to the first location information.

In this implementation, the core network device can convert the target location represented by using geographical location information such as latitude and longitude into a TAC, so that some policies, implemented based on the TAC, in the core network device can be connected to a registration update mechanism that is based on a reference location and a distance threshold. This helps improve compatibility between the registration update mechanism that is based on the reference location and the distance threshold and a registration update mechanism that is based on a TAC in the conventional technology, to enable a system to run stably.

It should be noted that some specific implementations and beneficial effects of this aspect are similar to some implementations of the first aspect. For details, refer to the specific implementations and beneficial effects of the first aspect. Details are not described herein again.

According to a fourth aspect, this application provides an information update method. In the method, an access network device does not sense content of a message transmitted between a terminal device and a core network device, and the access network device performs only transparent transmission. In the method, the terminal device receives third information from the core network device through the access network device, where the third information indicates the terminal device to send third location information to the core network device through the access network device; and the terminal device sends the third location information to the core network device through the access network device, and the terminal device determines a trigger condition of a registration update procedure based on the third location information.

In a possible implementation, the third location information includes a target location, and the target location is a location that is of the terminal device and that is obtained before the registration update procedure is triggered based on a first reference location and a first distance threshold.

In a possible implementation, a distance between the target location and the first reference location is less than the first distance threshold.

In a possible implementation, that the terminal device determines a trigger condition of a registration update procedure based on the third location information includes: The terminal device determines a second reference location based on the target location, where the second reference location is used to trigger the registration update procedure.

In a possible implementation, the third information includes third indication information, the third indication information indicates the terminal device to send the target location to the core network device through the access network device, and the target location includes a location determined by the terminal device within a preset time range before the terminal device is released. When the terminal device determines that the terminal device needs to be released, the terminal device determines the location of the terminal device within the preset time range before the terminal device is released as the target location.

In this embodiment, the core network device indicates the terminal device to report the location of the terminal device through the access network device before the terminal device is released. This helps the core network device learn of the location of the terminal device in a timely manner, and helps the core network device perform registration area management or paging area management on the terminal device. In addition, before the terminal device enters a non-connected mode (for example, an inactive mode or an idle mode), the terminal device reports a current location of the terminal device as the target location to the core network device based on the third indication information. Therefore, the core network device can learn of the geographical location of the terminal device before the terminal device enters the non-connected mode. This helps the core network device more accurately determine a paging area of the terminal device when paging management needs to be performed on the terminal device, to reduce signaling overheads caused by paging. In addition, because the core network device further updates the registration area based on the first indication information indicating the target location, the terminal device does not return, within short time after entering the non-connected mode, to a connected mode because the registration update procedure needs to be triggered. This helps avoid frequent switching between the connected mode and the non-connected mode of the terminal device, to reduce power consumption of the terminal device.

In a possible implementation, the third information includes fourth indication information, and the fourth indication information indicates that a location determined after the terminal device receives the fourth indication information is the target location. The terminal device determines, as the target location, the location that is of the terminal device and that is determined after receiving the fourth indication information.

In this implementation, when the terminal device is in the connected mode, the core network device can communicate with the NAS of the terminal device. Therefore, the core network device can sense whether the terminal device is to be released. In this implementation, the terminal device obtains the current location of the terminal device as the target location only after receiving the fourth indication information. This helps reduce complexity of the terminal device.

It should be noted that specific implementations and beneficial effects of this aspect are similar to some implementations of the first aspect. For details, refer to the specific implementations and beneficial effects of the first aspect. Details are not described herein again.

According to a fifth aspect, this application provides an information update method. In the method, an access network device does not sense content of a message transmitted between a terminal device and a core network device, and the access network device performs only transparent transmission. In the method, the core network device sends third information to the terminal device through the access network device that serves the terminal device, where the third information indicates the terminal device to send third location information of the terminal device to the core network device through the access network device; the core network device receives the third location information from the terminal device through the access network device; and the core network device determines a paging area and/or registration area of the terminal device based on the third location information.

In a possible implementation, the third location information includes a target location, and the target location is a location that is of the terminal device and that is obtained before a registration update procedure is triggered based on a first reference location and a first distance threshold.

In a possible implementation, a distance between the target location and the first reference location is less than the first distance threshold.

In a possible implementation, the paging area and/or registration area of the terminal device are/is represented by using a second reference location and/or second distance threshold, and the second reference location and the second distance threshold are determined based on the first location information.

In a possible implementation, the second distance threshold is greater than the first distance threshold.

In a possible implementation, the third information includes third indication information, the third indication information indicates the terminal device to send the target location to the core network device through the access network device, and the target location includes a location determined by the terminal device within a preset time range before the terminal device is released.

In this embodiment, the core network device indicates the terminal device to report the location of the terminal device through the access network device before the terminal device is released. This helps the core network device learn of the location of the terminal device. This helps the core network device perform registration area management or paging area management on the terminal device.

In a possible implementation, the third information includes fourth indication information, and the fourth indication information indicates that a location determined after the terminal device receives the fourth indication information is the target location; and that the core network device sends third information to the terminal device through the access network device that serves the terminal device includes: When the core network device determines that the terminal device needs to be released, the core network device sends the fourth indication information to the terminal device through the access network device.

In this implementation, when the terminal device is in a connected mode, the core network device can communicate with a NAS of the terminal device. Therefore, the core network device can sense whether the terminal device is to be released. In this implementation, the terminal device obtains the current location of the terminal device as the target location only after receiving the fourth indication information. This helps reduce complexity of the terminal device.

It should be noted that specific implementations and beneficial effects of this aspect are similar to some implementations of the fourth aspect. For details, refer to the specific implementations and beneficial effects of the fourth aspect. Details are not described herein again.

According to a sixth aspect, an embodiment of this application provides a communication apparatus. The communication apparatus may be the access network device in the foregoing implementation, or may be a chip in the access network device. The communication apparatus may include a processing module and a transceiver module. When the communication apparatus is the access network device, the processing module may be a processor, and the transceiver module may be a transceiver. The access network device may further include a storage module, and the storage module may be a memory. The storage module is configured to store instructions, and the processing module executes the instructions stored in the storage module, to enable the access network device to perform the method according to any one of the first aspect or the implementations of the first aspect. When the communication apparatus is the chip in the access network device, the processing module may be a processor, and the transceiver module may be an input/output interface, a pin, a circuit, or the like. The processing module executes instructions stored in a storage module, to enable the access network device to perform the method according to any one of the first aspect or the implementations of the first aspect. The storage module may be a storage module (for example, a register or a cache) in the chip, or may be a storage module (for example, a read-only memory or a random access memory) that is in the access network device and that is located outside the chip.

According to a seventh aspect, an embodiment of this application provides a communication apparatus. The communication apparatus may be the terminal device in the foregoing implementation, or may be a chip in the terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions, and the processing module executes the instructions stored in the storage module, to enable the terminal device to perform the method according to any one of the second aspect or the implementations of the second aspect, or perform the method according to any one of the fourth aspect or the implementations of the fourth aspect. When the communication apparatus is the chip in the terminal device, the processing module may be a processor, and the transceiver module may be an input/output interface, a pin, a circuit, or the like. The processing module executes instructions stored in a storage module, to enable the terminal device to perform the method according to any one of the second aspect or the implementations of the second aspect, or perform the method according to any one of the fourth aspect or the implementations of the fourth aspect. The storage module may be a storage module (for example, a register or a cache) in the chip, or may be a storage module (for example, a read-only memory or a random access memory) that is in the terminal device and that is located outside the chip.

According to an eighth aspect, an embodiment of this application provides a communication apparatus. The communication apparatus may be the core network device in the foregoing implementation, or may be a chip in the core network device. The communication apparatus may include a processing module and a transceiver module. When the communication apparatus is the core network device, the processing module may be a processor, and the transceiver module may be a transceiver. The core network device may further include a storage module, and the storage module may be a memory. The storage module is configured to store instructions, and the processing module executes the instructions stored in the storage module, to enable the core network device to perform the method according to any one of the third aspect or the implementations of the third aspect, or perform the method according to any one of the fifth aspect or the implementations of the fifth aspect. When the communication apparatus is the chip in the core network device, the processing module may be a processor, and the transceiver module may be an input/output interface, a pin, a circuit, or the like. The processing module executes instructions stored in a storage module, to enable the core network device to perform the method according to any one of the third aspect or the implementations of the third aspect, or perform the method according to any one of the fifth aspect or the implementations of the fifth aspect. The storage module may be a storage module (for example, a register or a cache) in the chip, or may be a storage module (for example, a read-only memory or a random access memory) that is in the core network device and that is located outside the chip.

According to a ninth aspect, this application provides a communication apparatus. The apparatus may be an integrated circuit chip. The integrated circuit chip includes a processor. The processor is coupled to a memory. The memory is configured to store a program or instructions. When the program is executed or the instructions are executed by the processor, the communication apparatus is enabled to perform the method according to any implementation of the foregoing aspects.

According to a tenth aspect, an embodiment of this application provides a computer program product including instructions. When the computer program product runs on a computer, the computer is enabled to perform the method according to any implementation of the foregoing aspects.

According to an eleventh aspect, an embodiment of this application provides a computer-readable storage medium, including instructions. When the instructions are run on a computer, the computer is enabled to perform the method according to any implementation of the foregoing aspects.

According to a twelfth aspect, an embodiment of this application provides a communication system. The communication system includes the access network device that performs the method according to any one of first aspect and the implementations of the first aspect, the terminal device that performs the method according to any one of the second aspect and the implementations of the second aspect, and the core network device that performs the method according to any one of the third aspect and the implementations of the third aspect. Alternatively, the communication system includes the terminal device that performs the method according to any one of the fourth aspect and the implementations of the fourth aspect, and the core network device that performs the method according to any one of the fifth aspect and the implementations of the fifth aspect.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application.
FIG. 1A is a schematic of a network architecture to which an information update method according to this application is applicable;
FIG. 1B is a schematic of another network architecture to which an information update method according to this application is applicable;
FIG. 1C is a schematic of another network architecture to which an information update method according to this application is applicable;
FIG. 2 is a flowchart of an information update method according to this application;
FIG. 3A is an example diagram of a scenario of triggering a registration update procedure in a conventional technology;
FIG. 3B is an example diagram of a scenario of triggering a registration update procedure according to this application;
FIG. 4 is another flowchart of an information update method according to this application;
FIG. 5 is another flowchart of an information update method according to this application;
FIG. 6 is another flowchart of an information update method according to this application;
FIG. 7 is another flowchart of an information update method according to this application;
FIG. 8 is another flowchart of an information update method according to this application;
FIG. 9 is a flowchart of a paging method according to this application;
FIG. 10 is a flowchart of a mobility restriction information processing method according to this application;
FIG. 11 is a diagram of an embodiment of a communication apparatus according to this application;
FIG. 12 is a diagram of another embodiment of a communication apparatus according to this application; and
FIG. 13 is a diagram of another embodiment of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that data used in such a way are interchangeable in appropriate circumstances, so that the embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

For ease of understanding, the following first describes a system architecture and an application scenario of an information update method provided in this application.

The information update method provided in this application may be applied to a 5G NR (5G New Radio) system, a 6th generation mobile communication technology (6th generation mobile communication technology, 6G) system, and a subsequent evolved standard. This is not limited in this application. The communication system includes at least a terminal device, an access network device, and a core network device.

The terminal device includes a device that provides voice and/or data connectivity for a user. For example, the terminal device may include a handheld device having a wireless connection function, or a processing device connected to a wireless modem. The terminal device may communicate with a core network (for example, a 5G core network (5th generation core, 5GC)) through a radio access network (radio access network, RAN), and may exchange voice and/or data with the RAN. The terminal device may also be referred to as a terminal (Terminal), a user equipment (user equipment, UE), a wireless terminal device, a mobile terminal (mobile terminal, MT) device, a subscriber unit (subscriber unit), a subscriber station (subscriber station), a mobile station (mobile station, MS), a mobile (mobile), a remote station (remote station), an access point (access point, AP), a remote terminal (remote terminal) device, an access terminal (access terminal) device, a user terminal (user terminal) device, a user agent (user agent), a user device (user device), or the like. Specifically, the terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. It should be understood that a specific technology and a specific device form used for the terminal device are not limited in this embodiment of this application. The terminal device in this application may be any one of the foregoing devices or chips. This is not specifically limited herein. Either being a device or a chip, the terminal device can be manufactured, sold, or used as an independent product. In this embodiment and subsequent embodiments, the terminal device is used as an example for description.

The access network device may be any device that has a radio transceiver function, and may be configured to be responsible for a function related to an air interface, for example, a radio link maintenance function, a radio resource management function, and some mobility management functions. In addition, a baseband unit (baseband unit, BBU) may be further configured for the access network device, to have a baseband signal processing function. For example, the access network device may be an access network device (radio access network, RAN) that currently serves the terminal device. Currently, some common examples of the access network device are a NodeB (NodeB, NB), an evolved NodeB (evolved NodeB, eNB), a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), and a home base station (for example, a home evolved NodeB (home evolved NodeB) or a home node (home NodeB, HNB)). In addition, in a network structure such as a cloud access network (cloud radio access network, CloudRAN) or an open access network (open radio access network, ORAN), the access network device may be a device including a central unit (central unit, CU) (also referred to as a control unit) and/or a distributed unit (distributed unit, DU). The RAN device including the CU and the DU separates protocol layers of a gNB in an NR system. Some functions of the protocol layers are controlled by the CU in a centralized manner, and some or all functions of the protocol layers are distributed in the DU, and the CU controls the DU in a centralized manner. It should be understood that the access network device in embodiments of this application may be any one of the foregoing devices or a chip in the foregoing device. This is not specifically limited herein. Either being a device or a chip, the access network device can be manufactured, sold, or used as an independent product. In this embodiment and subsequent embodiments, the access network device is used as an example for description.

The core network device is a device, in a core network (core network, CN), that provides service support for the terminal device. Currently, some common examples of the core network device are an access and mobility management function (access and mobility management function, AMF) entity, a session management function (session management function, SMF) entity, and a user plane function (user plane function, UPF) entity. Examples are not listed one by one herein. The AMF entity may be responsible for access management and mobility management of a terminal device. The SMF entity may be responsible for session management, for example, session establishment of a user. The UPF entity may be a functional entity on a user plane, and is mainly responsible for connecting to an external network. It should be noted that the entity in this application may also be referred to as a network element or a functional entity. For example, the AMF entity may also be referred to as an AMF network element or an AMF functional entity. For another example, the SMF entity may also be referred to as an SMF network element or an SMF functional entity. It should be noted that the core network device in this application includes at least an AMF entity.

For example, the information update method provided in this application may be applied to a non-terrestrial network (non-terrestrial network, NTN) architecture, for example, non-terrestrial network-based NG-RAN architectures (NTN-based NG-RAN architectures) defined in 3GPP TR38.821. In this case, some or all functions of the foregoing access network device may be implemented by using a satellite. The following separately describes several common examples:

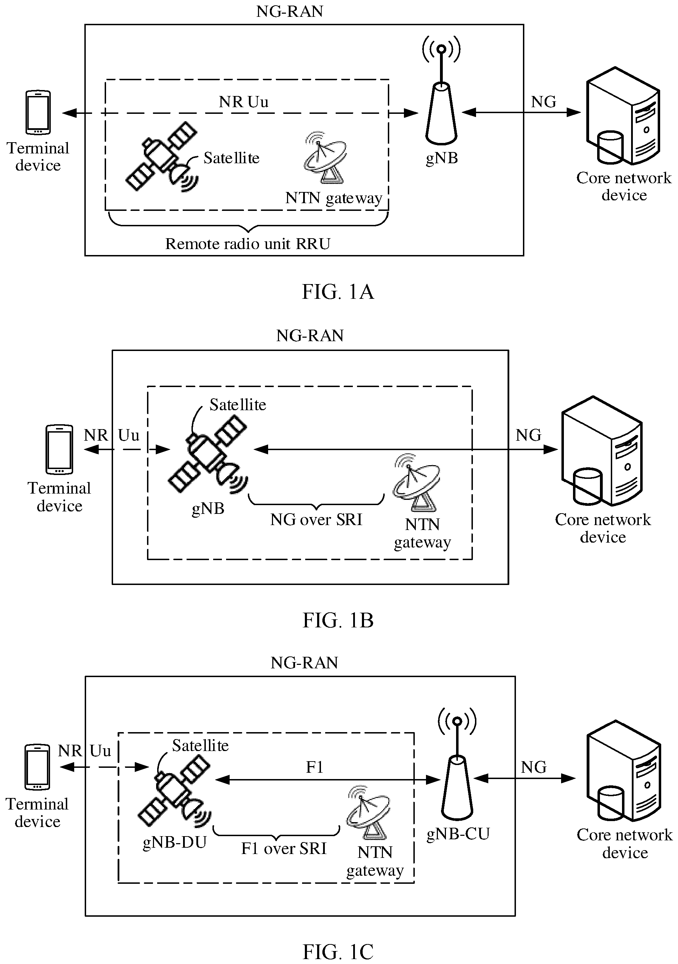

FIG. 1A shows an example of a transparent satellite based RAN architecture (RAN architecture with transparent satellite). A terrestrial base station (for example, a terrestrial gNB) is used as an access network device. A satellite is used as a remote radio unit (remote radio unit, RRU) (also referred to as an L1 relay or an L1 relay), has functions such as radio frequency conversion (frequency conversion) and frequency amplification (frequency amplification), and is configured to implement relay transparent transmission. An NTN gateway is configured to forward a signal from the satellite or a signal from the access network device. In the network structure, a terminal device sends an NR Uu radio interface signal to the access network device through relay transparent transmission performed by the satellite and forwarding performed by the NTN gateway. After receiving the signal, the terrestrial access network device communicates with a terrestrial core network device based on a terrestrial network technology in the conventional technology. Similarly, when the core network device sends a signal to the terminal device, the terrestrial base station (for example, the terrestrial gNB) is also used as the access network device, and the satellite is also configured to implement relay transparent transmission of a signal. Details are similar to those of the foregoing process, and details are not described herein again.

FIG. 1B shows an example of a regenerative satellite (regenerative satellite)-based RAN architecture. The satellite is used as an access network device, and is configured to regenerate a signal received from the ground. In the network structure, a terrestrial terminal device sends an NR Uu radio interface signal to the access network device (namely, the satellite) through a service link (service link) between the terrestrial terminal device and the satellite. The satellite, as the access network device, receives the NR Uu radio interface signal from the terminal device, and parses the received signal into an NG interface signal. Then, the satellite sends the signal to a terrestrial NTN gateway through a satellite radio interface (satellite radio interface, SRI) of a feeder link (feeder link), so that the terrestrial NTN gateway forwards the signal to a terrestrial core network device. Similarly, when the core network device sends a signal to the terminal device, the satellite is also configured to implement a function of the access network device. Details are similar to those of the foregoing process, and details are not described herein again.

FIG. 1C shows another example of a regenerative satellite (regenerative satellite)-based RAN architecture. A satellite is used as a DU of an access network device, and a terrestrial base station (for example, a gNB-CU) is used as a CU of the access network device. In the network structure, a terrestrial terminal device sends an NR Uu radio interface signal to the DU (namely, the satellite) of the access network device through a service link (service link) between the terrestrial terminal device and the satellite. The DU (namely, the satellite) of the access network device receives and parses the NR-Uu radio interface signal from the terminal device, to form an F1 radio interface signal. Then, the DU of the access network device sends the signal to a terrestrial NTN gateway through a satellite radio interface (satellite radio interface, SRI) of a feeder link (feeder link), so that the terrestrial NTN gateway forwards the signal to the CU of the terrestrial access network device. Then, after receiving the signal, the CU of the terrestrial access network device communicates with a terrestrial core network device based on a terrestrial network technology in the conventional technology. Similarly, when the core network device sends a signal to the terminal device, the satellite is also used as the DU of the access network device, and the terrestrial base station is also used as the CU of the access network device. Details are similar to those of the foregoing process, and details are not described herein again.

It should be understood that the terrestrial base station in the examples shown in FIG. 1A, FIG. 1B, and FIG. 1C may be implemented by using a gNB, or may be implemented by using a base station of another network standard, for example, an evolved NodeB (evolved NodeB, eNB) or a node (for example, an xNodeB) in a 6G system. This is not specifically limited herein. Only several common NTN architectures are described herein. The present invention may be further applied to another NTN architecture, and this is not limited herein.

At present, a registration update mechanism for an NTN system is provided. In the registration update mechanism, a reference location and a distance threshold are defined, and the terminal device needs to trigger a registration update procedure when a distance between a location of the terminal device and the reference location reaches the distance threshold. Specifically, a NAS of the terminal device obtains location information of the terminal device, and sends the location information of the terminal device to an access network device (for example, the terrestrial base station in FIG. 1A, the satellite in FIG. 1B, and the satellite and the terrestrial base station in FIG. 1C) by using a registration request (Registration Request) message. After receiving the registration request message, the access network device only transparently transmits the registration request message to a core network device, and does not sense content of the registration request message. In the mechanism, the terminal device needs to report the location information of the terminal device to the core network device by using a specific message (for example, the registration request message). Consequently, information that is about the terminal device and that is reported by the terminal device to the access network device based on another factor can be used by the access network device only for other processing, and cannot be reported to the core network device through the access network device. For example, the terminal device does not initiate the registration update procedure until a distance between a location of the terminal device and the reference location reaches the foregoing distance threshold, and then report the location of the terminal device to the core network device.

It can be learned that the foregoing mechanism may cause a case in which the core network device cannot obtain the location of the terminal device in a timely manner, and the terminal device still needs to trigger an unnecessary registration update procedure to report the location to the core network device. In addition, a message (for example, the registration request message) in the registration update procedure carries the location information of the terminal device, and further needs to carry other information. Consequently, signaling overheads are increased.

In view of this, this application provides an information update method. When a registration update mechanism based on a reference location and a distance threshold is still used, an access network device can participate in determining a location that is of a terminal device and that is reported to a core network device, instead of transparently transmitting only a location reported by the terminal device. The core network device is enabled to obtain the location of the terminal device in a timely manner based on a requirement of the core network device, and the core network device is further enabled to perform registration area management and/or paging area management based on the location that is of the terminal device and that is reported by the access network device.

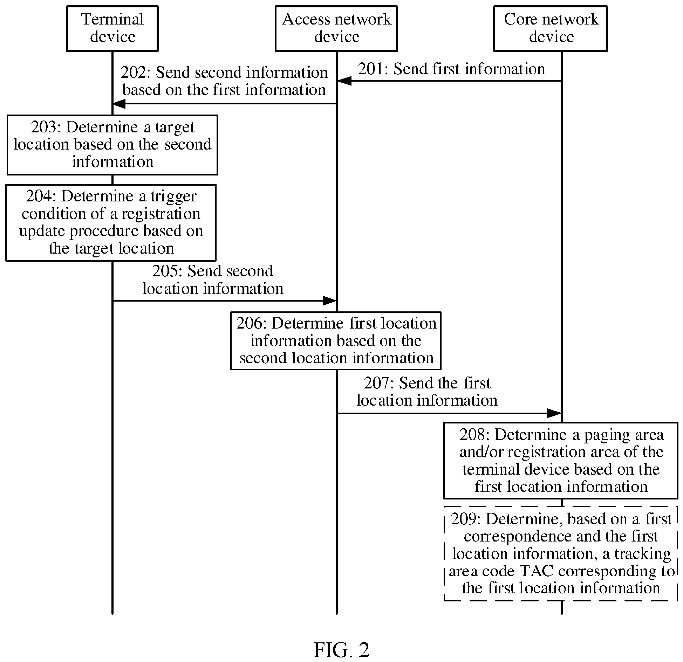

The following describes a main procedure of the information update method provided in this application with reference to FIG. 2. A core network device, an access network device, and a terminal device in the method are applicable to the NTN shown in any one of the examples in FIG. 1A, FIG. 1B, and FIG. 1C. In the NTN described in any example, after the core network device configures, for the terminal device through the access network device, a parameter for triggering a registration update based on a reference location and a distance threshold, the core network device, the access network device, and the terminal device perform the following steps.

Step 201: The core network device sends first information to the access network device. Correspondingly, the access network device receives the first information from the core network device.

The first information indicates the access network device to send first location information of the terminal device to the core network device, and the first location information indicates the access network device to report a target location of the terminal device to the core network device. Specifically, the first information may be rule information, used to determine a rule for reporting the first location information by the access network device to the core network device. In other words, after the access network device receives the first information, the access network device can determine, based on the first information, how to obtain the target location and how to report, to the core network device, the first location information indicating the target location. The first location information may be represented by using geographical location information, in other words, the geographical location information indicates the target location. The geographical location information may be longitude and latitude, a country, an administrative region, a street address, or the like; or may be a grid obtained through division based on longitude and latitude, for example, a grid determined at an interval of 5° in terms of longitude and at an interval of 5° in terms of latitude.

Optionally, the first location information is used by the core network device to determine a paging area and/or registration area of the terminal device. The paging area is an area used by the core network device to page the terminal device. There may be one or more access network devices in the paging area. The core network device may page the terminal device through the access network device in the paging area. In addition, the registration area is an area in which the terminal device registers with a core network. When the terminal device leaves the registration area, the terminal device triggers a registration update procedure. Optionally, the paging area and the registration area may be a same area. Optionally, the paging area and the registration area may be different areas. For example, the paging area includes the registration area, and a scope of the paging area is larger than that of the registration area.

Specifically, the target location is a location determined by the terminal device based on second information, and the location is used by the terminal device to determine a trigger condition of the registration update procedure. Specifically, for descriptions of a processing process in which the terminal device determines the target location based on the second information, refer to the following step 203. Specifically, for descriptions of a processing process in which the terminal device determines, based on the target location, the trigger condition of the registration update procedure, refer to the following step 204.

Specifically, the target location may be a geographical location that is of the terminal device and that is obtained by the terminal device within a specific time range, or may be a current geographical location of the terminal device when the terminal device moves to a space range.

In a possible implementation, the target location is a location that is of the terminal device and that is obtained before the registration update procedure is triggered based on a first reference location and a first distance threshold. It may be understood that the target location is a location of the terminal device before a specific moment, and the specific moment is a moment at which the registration update procedure is triggered. In other words, the target location is a location of the terminal device before the specific moment at which the terminal device triggers the registration update procedure based on the first reference location and the first distance threshold.

It should be noted that the first reference location and the first distance threshold are parameters that are configured by the core network device for the terminal device and that are used to trigger the registration update procedure. For example, before the core network device performs step 201, the core network device may send registration update rule information to the terminal device through the access network device. The registration update rule information includes the parameters (for example, the first reference location and the first distance threshold) used to trigger the registration update procedure. The terminal device triggers the registration update procedure based on the first reference location and the first distance threshold when the trigger condition is satisfied. Specifically, when a distance between a location of the terminal device and the first reference location reaches the first distance threshold, the terminal device triggers the registration update procedure.

It should be noted that an area determined based on a reference location (for example, the first reference location) and a distance threshold (for example, the first distance threshold) in this application may be understood as a circle, for example, a circle whose center is the reference location and whose radius is the distance threshold; may be a rectangle, for example, a rectangle whose geometric center is the reference location and whose distance from the geometric center to a side of the rectangle is the distance threshold; or may be an area of another shape. In this application, an example in which the area determined by the reference location and the distance threshold is a circle is used for description.

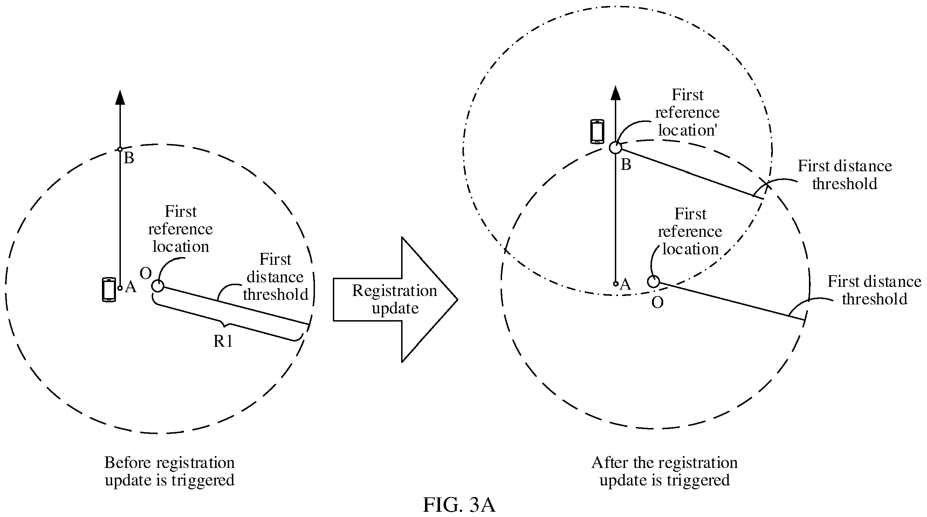

For ease of understanding, FIG. 3A is used as an example. A registration update rule configured by the core network device for the terminal device includes the first reference location (namely, a point O) and the first distance threshold (R1). When the terminal device moves in a circular area whose circle center is the point O (namely, the first reference location) and whose radius is R1 (namely, the first distance threshold), the terminal device does not trigger the registration update procedure. When the terminal device moves to the boundary of the circular area or just moves out of the circular area (for example, the terminal device moves from a point A to a point B in FIG. 3A), the terminal device triggers the registration update procedure at the point B. Specifically, the terminal device sends a location of the point B to the core network device through the access network device, and the terminal device updates the first reference location based on the location of the point B, to be specific, updates the first reference location from the point O to the point B. Then, the terminal device calculates, by using the point B as a new first reference location, whether a distance between a current location of the terminal device and the new first reference location reaches the first distance threshold, and triggers the registration update procedure again when the distance reaches the first distance threshold. The rest are deduced by analogy.

In another possible implementation, a distance between the target location of the terminal device and the first reference location is less than the first distance threshold. It may be understood that the target location is a location in a specific area, and the specific area is an area determined based on a configured parameter used to trigger the registration update procedure, for example, an area determined based on the first reference location and the first distance threshold. In other words, the target location is a location of the terminal device in an area determined based on the first reference location and the first distance threshold.

It should be noted that, that a distance between the target location and the first reference location is less than the first distance threshold means that the target location is in the area determined based on the first reference location and the first distance threshold. In other words, the location that is of the terminal device and that the core network device requires, based on the first information, the access network device to report is the location of the terminal device in the area determined based on the first reference location and the first distance threshold. In this case, the terminal device has not triggered the registration update procedure. Therefore, this helps reduce signaling overheads caused by triggering the registration update procedure.

It should be noted that in this application, the target location may be described in either one of the foregoing implementations, or may satisfy the descriptions in both of the foregoing two implementations. This is not specifically limited herein.

It should be understood that, when the first information includes different content and the first information indicates different rules, the access network device obtains the foregoing target location in different manners. The following separately provides descriptions.

In a manner 1, the first information includes first rule information, and the first rule information is used to determine that the target location includes a location of the terminal device when a distance between the terminal device and the first reference location reaches a distance threshold A. It may alternatively be understood that the first rule information indicates to determine, as the target location, the location of the terminal device when the distance between the terminal device and the first reference location reaches the distance threshold A. Optionally, the first rule information includes the distance threshold A, and the distance threshold A is less than the first distance threshold.

In an example 1 of the manner 1, the first rule information can indicate that a decision body for determining whether a location of the terminal device satisfies a first rule is the terminal device or the access network device, in other words, the first rule information can indicate that a device that determines whether a distance between the location of the terminal device and the first reference location reaches the distance threshold A is the terminal device or the access network device. For example, in an implementation of the example 1 (referred to as an example 1.1 below), the first rule information indicates the access network device to determine, as the target location, a location of the terminal device when a distance between the terminal device and the first reference location reaches the distance threshold A. For another example, in another implementation of the example 1 (referred to as an example 1.2 below), the first rule information indicates the terminal device to determine, as the target location, a location of the terminal device when a distance between the terminal device and the first reference location reaches the distance threshold A.

In the example 1, before sending the first rule information, the core network device has determined that the terminal device or the access network device determines whether the location of the terminal device satisfies the first rule. Therefore, the core network device can clearly learn of the decision body for obtaining the target location (to be specific, whether the access network device or the terminal device determines whether the location of the terminal device satisfies the first rule), so that the core network device adjusts a value of the distance threshold A based on different decision bodies. In addition, this helps reduce implementation complexity of the terminal device and the access network device.

In addition, in an example 2 of the manner 1, the first rule information may alternatively not indicate that a decision body for determining whether a location of the terminal device satisfies a first rule is the terminal device or the access network device, but the determining is implemented by the access network device. For example, in an implementation of the example 2 (referred to as an example 2.1 below), after receiving the first rule information, the access network device determines, based on a factor, for example, current network quality, that the access network device serves as the decision body, to be specific, the access network device determines whether a distance between a current location of the terminal device and the first reference location reaches the distance threshold A. For another example, in another implementation of the example 2 (referred to as an example 2.2 below), the access network device determines that the terminal device serves as the decision body and sends the first rule information to the terminal device, and the terminal device determines whether a distance between a current location of the terminal device and the first reference location reaches the distance threshold A.

In the example 2, the access network device can determine, based on a factor, for example, network quality, the decision body for obtaining the target location, to help improve flexibility and accuracy of reporting the target location by the access network device to the core network.

It should be understood that, the first rule information in this embodiment may be in any one of the foregoing implementations. This is not specifically limited herein.

In a manner 2, the first information includes second rule information, and the second rule information is used to determine that the target location includes each location that is of the terminal device and that is sent by the terminal device to the access network device. It may alternatively be understood that the second rule information indicates that each location received by the access network device from the terminal device is the target location.

It should be noted that in this implementation, regardless of a reason for which the terminal device reports a location of the terminal device to the access network device, the access network device reports the received location of the terminal device as the target location to the core network device.

For example, if the terminal device reports a location of the terminal device to the access network device in a handover (handover, HO) procedure, the access network device determines, based on the location of the terminal device, whether to perform handover, and further sends the location of the terminal device to the core network device. For another example, based on a beamforming optimization requirement of the access network device, the access network device can request the terminal device to report a location of the terminal device to the access network device, so that the access network device may send the obtained location of the terminal device to the core network device. For another example, the access network device may indicate the terminal device to report a location of the terminal device, convert the location of the terminal device into a tracking area identity (tracking area identity, TAI), and report the TAI to the core network device (for example, an AMF entity), so that the core network device (for example, the AMF entity) performs access management. In this example, the access network device sends only the TAI determined based on the location of the terminal device to the core network device, without directly reporting the location of the terminal device to the core network device.

If the access network device receives each location that is of the terminal device and that is obtained in any one of the foregoing examples, the access network device can use each location of the terminal device as the target location based on the second rule information, and send the target location to the core network device.

In a manner 3, the first information includes third rule information, and the third rule information is used by the access network device to determine that the target location includes a location that is of the terminal device and that is obtained within a preset time range before the terminal device is released or suspended. It may alternatively be understood that the third rule information indicates the access network device to determine, as the target location, the location that is of the terminal device and that is obtained within the preset time range before the terminal device is released or suspended.

Released (released) means that the terminal device enters an idle (idle) mode from a connected (connected) mode, and suspended (suspended) means that the terminal device enters an inactive (inactive) mode from the connected mode.

It should be understood that the first information in this embodiment may include the rule information described in any one or more of the foregoing implementations. This is not specifically limited herein.

Optionally, the first information further includes second indication information, and the second indication information indicates the terminal device to update the first reference location based on the target location. It may alternatively be understood that the second indication information indicates the terminal device to determine the trigger condition of the registration update procedure based on the target location. For example, the second indication information indicates the terminal device to use the target location as the trigger condition of the registration update procedure. Optionally, the second indication information further indicates an AS of the terminal device to send the target location to a NAS of the terminal device.

Step 202: The access network device sends the second information to the terminal device based on the first information. Correspondingly, the terminal device receives the second information from the access network device.

The second information indicates the terminal device to send second location information to the access network device, and the second location information indicates the target location reported by the terminal device to the access network device. Specifically, the second information may be rule information, used to determine a rule for reporting the second location information by the terminal device to the access network device. In other words, after the terminal device receives the second information, the terminal device can determine, based on the second information, how to obtain the target location and how to report, to the access network device, the second location information indicating the target location. Optionally, the second information is indication information, indicating the terminal device to report a current location of the terminal device to the access network device, and indicating that the location that is of the terminal device and that is currently reported by the terminal device is the target location. Optionally, the second location information is used to determine the first location information described in step 201. Specifically, for a specific implementation of determining the first location information based on the second location information, refer to step 206.

It should be understood that the second information is determined by the access network device based on the first information. The second information may include some or all content of the first information, and the second information may alternatively be different from the first information. When the first information received by the access network device includes different content, the first information indicates different rules, and the second information determined by the access network device also have different content. The following separately provides descriptions.

In a possible implementation, the first information includes the first rule information, and the first rule information can indicate that a decision body for determining whether the location of the terminal device satisfies the first rule is the access network device (for details, refer to the example 1.1 in the manner 1 in step 201), or the access network device determines that the access network device determines whether the location of the terminal device satisfies the first rule (for details, refer to the example 2.1 in the manner 1 in step 201). In this case, the second information determined by the access network device based on the first rule information includes first indication information, and the first indication information indicates that a location that is of the terminal device and that is determined after the terminal device receives the first indication information is the target location. For example, the location that is of the terminal device and that is determined after the terminal device receives the first indication information may be a 1^{st} location determined after the terminal device receives the first indication information, or may be a location of the terminal device when the terminal device receives the first indication information.

In an implementation of this implementation, because a communication connection, for example, a radio resource control (radio resource control, RRC) connection exists between the terminal device and the access network device, the access network device can obtain a location of the terminal device during signaling exchange between the terminal device and the access network device. As the terminal device moves, the access network device may obtain one or more locations reported by the terminal device. Each time after the access network device receives a location of the terminal device, the access network device determines, based on the first rule information, whether a distance between the currently received location of the terminal device and the first reference location reaches the distance threshold A. If the access network device determines that the distance between the currently received location of the terminal device and the first reference location reaches the distance threshold A, the access network device sends the first indication information to the terminal device, to indicate that the location that is of the terminal device and that is determined after the terminal device receives the first indication information is the target location.

In this implementation, the terminal device obtains the current location of the terminal device as the target location based only on the first indication information, and the terminal device does not need to determine the distance between the terminal device and the first reference location. Therefore, this helps reduce complexity of the terminal device, and further helps reduce power consumption of the terminal device.

In another possible implementation, the first information is implemented in the manner 1 in step 201, to be specific, the first information includes the first rule information, and the first rule information can indicate that a decision body for determining whether the location of the terminal device satisfies the first rule is the terminal device (for details, refer to the example 1.2 in the manner 1 in step 201); or the access network device determines that the terminal device determines whether the location of the terminal device satisfies the first rule (for details, refer to the example 2.2 in the manner 1 in step 201). In this case, the second information determined by the access network device based on the first rule information includes the first rule information. In this case, the terminal device determines, based on the first rule information, whether the distance between the location of the terminal device and the first reference location reaches the distance threshold A; in addition, when the terminal device determines that the distance between the location of the terminal device and the first reference location reaches the distance threshold A, the location of the terminal device is the target location. It should be noted that the first rule information in the second information may not be completely the same as the first rule information in the first information in terms of content and/or forms. A specific implementation of the first rule information is not limited herein. For example, the access network device may re-determine the first rule information in the second information based on the first rule information in the first information. For another example, the access network device directly sends the first rule information in the received first information to the terminal device as the first rule information in the second information.

In this implementation, the terminal device is easier to determine the location of the terminal device than the access network device. Therefore, this helps improve accuracy and timeliness of the target location sent by the terminal device to the access network device, and further helps improve accuracy and timeliness of the target location sent by the access network device to the core network device.

In another possible implementation, the first information is implemented in the manner 2 in step 201, to be specific, the first information includes the second rule information. In this case, the second information determined by the access network device based on the second rule information includes the second rule information. It should be noted that the second rule information in the second information may not be completely the same as the second rule information in the first information in terms of content and/or forms. A specific implementation of the second rule information is not limited herein. For example, the access network device may re-determine the second rule information in the second information based on the second rule information in the first information. For another example, the access network device directly sends the second rule information in the received first information to the terminal device as the second rule information in the second information.

In this implementation, the core network device sends the second rule information to the access network device, so that the access network device learns that each location that is of the terminal device and that is received from the terminal device is the target location. The access network device sends the second rule information to the terminal device, so that the terminal device can learn that the location determined by the terminal device each time is the target location and needs to be sent to the access network device. This helps make the terminal device and the access network device have a consistent understanding of the target location, to avoid a case in which a target location used by the terminal device to update the first reference location is inconsistent with a target location reported by the access network device to the core network device.

In another possible implementation, the first information is implemented in the manner 3 in step 201, to be specific, the first information includes the third rule information. In this case, the second information determined by the access network device based on the third rule information includes the first indication information, and the first indication information indicates that a location that is of the terminal device and that is determined after the terminal device receives the first indication information is the target location. For example, the location that is of the terminal device and that is determined after the terminal device receives the first indication information may be a 1^{st} location determined after the terminal device receives the first indication information, or may be a location of the terminal device when the terminal device receives the first indication information.

In an implementation of this implementation, a communication connection, for example, an RRC connection exists between the terminal device and the access network device, so that the access network device can receive service data from the terminal device. If the access network device does not receive service data from the terminal device within a period of time, the access network device may determine that the terminal device is about to leave the connected mode and enter a non-connected mode (for example, the idle mode or the inactive mode), to be specific, the access network device determines that the terminal device needs to be released or suspended. Therefore, the access network device sends the first indication information to the terminal device, to indicate that a location that is of the terminal device and that is determined after the terminal device receives the first indication information is the target location.

In this implementation, before entering the non-connected mode (for example, the inactive mode or the idle mode), the terminal device can obtain the current location of the terminal device based on the first indication information as the target location. Therefore, the terminal device can be prevented from re-entering the connected mode within short duration after entering the non-connected mode because the registration update procedure needs to be triggered. This helps reduce signaling overheads, and further helps reduce power consumption of the terminal device.

It should be understood that the first indication information in this implementation and the first indication information in the foregoing implementation may be same indication information, or may be different indication information (for example, having different content and forms but having a same function). This is not limited herein. When the terminal device receives the first indication information, the terminal device does not sense a rule based on which the access network device determines the target location, and the terminal device can determine, as the target location, the location that is of the terminal device and that is reported to the access network device after receiving the first indication information.

It should be understood that, when the first information in this embodiment includes only the rule information described in any one of the foregoing implementations, the second information determined by the access network device is determined according to the foregoing implementation of the first information. When the first information in this embodiment includes the rule information described in the foregoing two or more implementations, the second information also includes a plurality of implementations, and each implementation corresponds to the foregoing first information. This is not specifically limited herein.

Optionally, when the first information includes the second indication information, the second information also includes the second indication information. The second indication information indicates the terminal device to update the first reference location based on the target location. It may alternatively be understood that the second indication information indicates the terminal device to determine the trigger condition of the registration update procedure based on the target location. Specifically, for a specific implementation in which the terminal device determines the trigger condition of the registration update procedure based on the target location, refer to the following descriptions in step 204.

It should be noted that in this embodiment, the access network device sends the second information to the AS of the terminal device, and correspondingly, the AS of the terminal device receives the second information from the access network device. Optionally, the second indication information further indicates the AS of the terminal device to send the target location to the NAS of the terminal device.

Step 203: The terminal device determines the target location based on the second information.

In this embodiment, when the second information received by the terminal device includes different content, the terminal device determines the target location based on the second information in different manners. The following separately provides descriptions.

In a possible implementation, the second information includes the first rule information, the first rule information is used to determine that the target location includes a location of the terminal device when a distance between the terminal device and the first reference location reaches the distance threshold A, and the distance threshold A is less than the first distance threshold. In this case, the terminal device can determine a distance between a current location of the terminal device and the first reference location based on the first rule information. When the distance between the current location of the terminal device and the first reference location reaches the distance threshold A, the terminal device determines the current location of the terminal device as the target location.

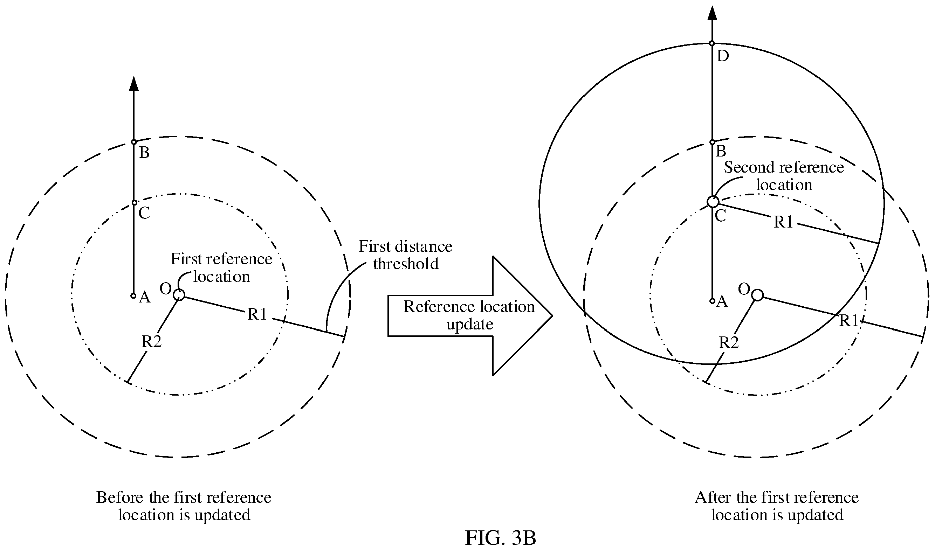

For ease of understanding, FIG. 3B is used as an example. A registration update rule configured by the core network device for the terminal device includes the first reference location (namely, a point O) and the first distance threshold (R1), and the first rule information sent by the access network device to the terminal device includes the distance threshold A (R2). When the terminal device moves in a circular area whose circle center is the point O (namely, the first reference location) and whose radius is R1 (namely, the first distance threshold), the terminal device does not trigger the registration update procedure. In addition, when the terminal device moves in a circular area whose circle center is the point O (namely, the first reference location) and whose radius is R2 (namely, the distance threshold A), the terminal device does not need to determine the target location. When the terminal device moves to the boundary of the circular area whose circle center is the point O and whose radius is R2 or just moves out of the circular area (for example, the terminal device moves from the point A to a point C in FIG. 3B), the terminal device determines a location of the point C as the target location. It can be learned from FIG. 3B that the point C is located in the circular area whose circle center is the point O and whose radius is R1.

In this implementation, the terminal device determines a current location of the terminal device as the target location based on the first rule information. The terminal device is easier to determine the location of the terminal device than the access network device. Therefore, this helps improve accuracy and timeliness of the target location sent by the terminal device to the access network device, and further helps improve accuracy and timeliness of the target location sent by the access network device to the core network device.

In another possible implementation, the second information includes the first indication information, and the first indication information indicates that a location that is of the terminal device and that is determined after the terminal device receives the first indication information is the target location. In this case, the terminal device determines, as the target location, the location that is of the terminal device and that is determined after receiving the first indication information.

Specifically, after the terminal device receives the first indication information, the terminal device may obtain a current location of the terminal device by using a module that can obtain location information, for example, a global positioning system (global positioning system, GPS) or a global navigation satellite system (global navigation satellite system, GNSS), and determine the current location of the terminal device as the target location.

It should be understood that the first indication information in this implementation may be triggered by the access network device based on the first rule information, to be specific, the access network device determines, based on the first rule information when the distance between the location of the terminal device and the first reference location reaches the distance threshold A, to send the first indication information to the terminal device. The first indication information may alternatively be triggered by the access network device based on the third rule information, to be specific, the access network device determines, based on the third rule information when the terminal device needs to be released or suspended, to send the first indication information to the terminal device. This is not specifically limited herein.

In this implementation, the terminal device obtains the current location of the terminal device as the target location based only on the first indication information, the terminal device does not need to determine a distance between the terminal device and the first reference location, and the terminal device does not need to determine whether the terminal device is released or suspended. Therefore, this helps reduce complexity of the terminal device, and further helps reduce power consumption of the terminal device.

In another possible implementation, the second information includes the second rule information, and the second rule information is used to determine that the target location includes each location that is of the terminal device and that is sent by the terminal device to the access network device.

It should be understood that, before the terminal device receives the second rule information, configuration information, for example, a handover-based measurement configuration, used to determine a location of the terminal device may be configured for the terminal device. Regardless of whether the terminal device receives the second rule information, the terminal device determines the location of the terminal device based on the configured configuration information that is used to determine the location of the terminal device. After the terminal device receives the second rule information, the terminal device determines each determined location as the target location, and sends each target location to the access network device.

It should be further understood that, generally, a network side configures, for the terminal device, a plurality of pieces of configuration information used to determine a location of the terminal device, and frequency of obtaining the location of the terminal device by the terminal device is higher than frequency of triggering a registration update by the terminal device. Therefore, the terminal device can always determine one or more locations as target locations in the circular area whose circle center is the point O and whose radius is R1 in FIG. 3B.

In this implementation, the access network device sends the second rule information to the terminal device. This helps the terminal device learn that the access network device determines a location reported by the terminal device to the access network device each time as the target location, and helps the terminal device and the access network device have a consistent understanding of the target location, to prevent the terminal device from triggering an unnecessary registration update procedure, and reduce signaling overheads.

It should be noted that in an actual application, the terminal device may generate the target location based on the second information described in any one of the foregoing implementations, or may generate the target location based on the second information described in the foregoing plurality of implementations. This is not specifically limited herein.

It should be further noted that, in an actual application, the AS of the terminal device determines the target location of the terminal device according to any one or more of the foregoing implementations, instead of obtaining, by the NAS of the terminal device, the location of the terminal device. In this way, this helps the access network device that receives the target location from the AS of the terminal device sense the target location, so that the access network device determines a more accurate target location and reports the location to the core network device.

Step 204: The terminal device determines the trigger condition of the registration update procedure based on the target location.

The trigger condition of the registration update procedure may be understood as that a parameter that triggers the registration update procedure reaches a value. When an indicator of the terminal device reaches the value of the foregoing parameter, the terminal device triggers the registration update procedure.

Specifically, the terminal device determines a second reference location based on the target location, where the second reference location is used to trigger the registration update procedure. For example, before the terminal device determines the second reference location based on the target location, the terminal device triggers the registration update procedure based on the first reference location and the first distance threshold. In other words, when a distance between a current location of the terminal device and the first reference location reaches the first distance threshold, the terminal device triggers the registration update procedure. After the terminal device determines the second reference location based on the target location, if the terminal device does not determine another distance threshold, the terminal device triggers the registration update procedure based on the second reference location and the first distance threshold. In other words, when a distance between a current location of the terminal device and the second reference location reaches the first distance threshold, the terminal device triggers the registration update procedure. In this example, the parameter that triggers the registration update procedure is changed from the first reference location to the second reference location. Therefore, it may alternatively be understood that the terminal device updates the first reference location based on the target location, to obtain the second reference location.

In a possible implementation, the terminal device directly uses the target location as the second reference location.

Specifically, inside the terminal device, the AS of the terminal device sends the target location to the NAS of the terminal device, and then the NAS of the terminal device updates the first reference location based on the target location, to obtain the second reference location.

It should be noted that in an actual implementation, the AS of the terminal device may send the target location to the NAS of the terminal device only as indicated by the second indication information, or it may be specified in a protocol that the AS of the terminal device sends the received target location to the NAS of the terminal device.

In a possible implementation, the NAS of the terminal device replaces, with the target location, the first reference location configured by the core network, and the obtained second reference location is the target location. Then, the NAS of the terminal device uses the second reference location and the first distance threshold as parameters for triggering the registration update procedure. In other words, the NAS of the terminal device triggers the registration update procedure only after the NAS of the terminal device determines that a distance between a location of the terminal device and the second reference location reaches the first distance threshold.

For ease of understanding, FIG. 3B is still used as an example. When the terminal device moves to the boundary of the circular area whose circle center is the point O and whose radius is R2 or just moves out of the circular area (for example, the terminal device moves from the point A to the point C in FIG. 3B), the terminal device determines the location of the point C as the target location. Then, the terminal device updates the first reference location by using the location of the point C, to obtain the second reference location. In other words, the point C is determined as the second reference location. Then, when the terminal device determines whether to trigger the registration update procedure, the terminal device determines, depending on whether a distance between a current location of the terminal device and the location of the point C (namely, the second reference location) reaches the first distance threshold. As shown in FIG. 3B, when the first distance threshold remains unchanged, the terminal device needs to move at least from the point C to a point D to trigger the registration update procedure. In other words, according to the solution described in this implementation, when the terminal device moves within a distance from the point A to the point D, the terminal device does not trigger the registration update procedure. However, based on a registration update mechanism in the conventional technology, if the terminal device moves from the point A to the point B, the terminal device triggers the registration update procedure. It can be learned that, in the solution provided in this application, duration between triggering of registration update procedures by the terminal device is prolonged, and frequency of triggering the registration update procedure by the terminal device is reduced, to reduce signaling overheads caused by triggering the registration update procedure.

It should be noted that, in an actual application, the trigger condition of the registration update procedure may further include other information, for example, the first reference location, the first distance threshold, and a second distance threshold.

Step 205: The terminal device sends the second location information to the access network device. Correspondingly, the access network device receives the second location information from the terminal device.

The second location information indicates the target location determined by the terminal device based on the second information. The second location information may include one or more target locations.

Specifically, the AS of the terminal device sends the second location information to the access network device. Correspondingly, the access network device receives the second location information from the AS of the terminal device.

The AS of the terminal device sends the second location information to the access network device, instead of sending, by the NAS of the terminal device, the second location information to the access network device. Therefore, the access network device can sense content received from the AS of the terminal device, so that the access network device determines a more accurate target location and reports the location to the core network device.

It should be understood that a specific time sequence of step 204 and step 205 is not limited. In other words, the terminal device may first perform step 204 and then perform step 205, may first perform step 205 and then perform step 204, or may simultaneously perform step 204 and step 205. This is not specifically limited in this embodiment.

Step 206: The access network device determines the first location information based on the second location information.

The second location information is information that is received by the access network device from the terminal device and that indicates the target location, and the first location information is information that needs to be sent by the access network device to the core network device and that indicates the target location.

In a possible implementation, the access network device directly uses the second location information as the first location information, in other words, the first location information determined by the access network device is the same as the second location information received by the access network device.

In another possible implementation, formats, content, and precision of the second location information and the first location information are not completely the same, but both of them indicate the target location. The precision may be understood as precision of a unit for describing the target location. For example, the precision of the second location information may be meters, and the precision of the first location information may be kilometers.

Step 207: The access network device sends the first location information to the core network device. Correspondingly, the core network device receives the first location information from the access network device.

The first location information indicates the target location determined by the access network device based on the second location information. The first location information may indicate one or more target locations of the terminal device. The target location indicated by the first location information is the same as the target location indicated by the second location information.

Step 208: The core network device determines the paging area and/or registration area of the terminal device based on the first location information.

When the terminal device is located in the registration area, the terminal device does not trigger the registration update procedure. When the terminal device leaves the registration area (for example, the terminal device crosses the boundary of the registration area), the terminal device triggers the registration update procedure.

Specifically, the core network device determines the second reference location and/or second distance threshold based on the target location indicated by the first location information, where the second reference location and/or second distance threshold are/is used to trigger the registration update procedure. In this embodiment, the core network device may determine the second reference location based only on the target location, or it may alternatively be understood that the core network device updates the first reference location based on the target location to obtain the second reference location; or the core network device may determine the second reference location and the second distance threshold based on the target location, or it may be understood that the core network device updates the first reference location and the first distance threshold based on the target location to obtain the second reference location and the second distance threshold. The following separately provides descriptions.

In a possible implementation, the core network device determines only the second reference location based on the target location, and does not determine a distance threshold (for example, the second distance threshold) other than the first distance threshold. For example, the core network device uses the target location as the second reference location, and the second reference location is used to replace the first reference location stored in the core network. In this case, the registration area of the terminal device may be an area determined based on the second reference location and the first distance threshold. For example, the registration area of the terminal device is a circular area whose circle center is the second reference location and whose radius is the first distance threshold. For another example, the registration area of the terminal device is a rectangle whose geometric center is the second reference location and whose distance from the geometric center to a side of the rectangle is the first distance threshold. A specific shape of the registration area is not limited in this application.

In this implementation, both the terminal device and the core network device update the first reference location based on the target location and obtain the second reference location. Therefore, when the core network device receives a registration update request triggered by the terminal device again, the core network device can determine a current location of the terminal device, in other words, a distance between the current location of the terminal device and the second reference location reaches the first distance threshold.

In another possible implementation, the core network device determines both the second reference location and the second distance threshold based on the target location. Specifically, in addition to using the target location as the second reference location, the core network device further determines the second distance threshold based on frequency of receiving the target location. For example, if a quantity of target locations received by the core network device within preset duration reaches a preset quantity (where the preset duration and the preset quantity may be determined based on a factor, for example, network quality), it indicates that the first distance threshold is set to a small value, and the core network device may update the first distance threshold to the second distance threshold, where the second distance threshold is greater than the first distance threshold. Therefore, this helps reduce frequency of triggering a registration update by the terminal device, and helps prolong a time interval between two registration update procedures triggered by the terminal device. In this case, the registration area of the terminal device may be an area determined based on the second reference location and the second distance threshold. For example, the registration area of the terminal device is a circular area whose circle center is the second reference location and whose radius is the second distance threshold. For another example, the registration area of the terminal device is a rectangle whose geometric center is the second reference location and whose distance from the geometric center to a side of the rectangle is the second distance threshold. A specific shape of the registration area is not limited in this application.

In another possible implementation, the core network device determines the second distance threshold based on a TAC list. Specifically, the TAC list is determined by the access network device based on beam identification information and sent to the core network device. The beam identification information indicates a beam used by the terminal device for communication, and the beam identification information may be a synchronization signal block identifier (synchronization signal block identifier, SSB ID). Optionally, the TAC list may be included in user location information (User Location Information) sent by the access network device to the core network device, or may be included in other information sent by the access network device to the core network device. This is not limited herein. Optionally, a method for obtaining the beam identification information by the access network device includes: The terminal device determines the target location, and sends, to the access network device, identification information of a beam that covers the target location; or the terminal device sends, to the access network device during a registration update, identification information of a beam that covers a location of the terminal device, where the beam identification information may be included in an RRC connection setup complete (RRC Setup Complete) message sent by the terminal device to the access network device. In addition, the access network device may alternatively obtain the beam identification information by using an internal algorithm. Optionally, the TAC list is determined by the access network device based on the second location information reported by the terminal device and sent to the core network device.

It should be noted that the TAC list in this implementation may include one or more TACs. This is not limited herein. In addition, the TAC list may alternatively be replaced with a TAI list. This is not limited herein.

In this implementation, the core network device does not sense a specific location of the terminal device, and processes only the TAC list. Therefore, compatibility with the conventional technology is facilitated, and a distance threshold can be determined when a UE cannot report a location before security establishment. This helps determine the registration area as early as possible, improve accuracy of the registration area, and improve paging performance.

It should be noted that because the core network device determines the second distance threshold, but the terminal device does not determine the second distance threshold, the core network device may send the second distance threshold to the terminal device through the access network device, so that the terminal device can trigger the registration update procedure based on the second reference location and the second distance threshold. In this way, the parameter such as the reference location and/or the distance threshold used by the terminal device is consistent with the parameter such as the reference location and/or the distance threshold determined by the core network device.

In this application, because the access network device can report, to the core network device as indicated by the core network device, the location information that is of the terminal device and that is determined by the access network device, the core network device can obtain the location information of the terminal device in a timely manner and determine the paging area or the registration area of the terminal device based on the location information of the terminal device, without waiting for the terminal device to initiate the registration update procedure, to improve timeliness and accuracy of paging management and/or registration management on the terminal device. In addition, the core network device may obtain the location information of the terminal device without the registration update procedure, and the terminal device does not need to initiate an unnecessary registration update procedure to report the location information. This helps reduce signaling overheads caused by triggering the registration update procedure by the terminal device.

In addition, because the terminal device has not triggered a registration update based on the first reference location and the first distance threshold, it indicates that a distance between the terminal device and the first reference location is less than the first distance threshold. In this case, if the core network device and the terminal device can update the first reference location (for example, replace the first reference location with the current location of the terminal device), a distance between the location of the terminal device and the updated first reference location is shortened. This helps reduce frequency of triggering a registration update by the terminal device, and helps prolong a time interval between triggering of registration update procedures by the terminal device. In an NTN system, even if beam movement of a satellite causes frequent changes of identifiers of tracking areas (tracking areas, TAs) and cells of a terminal device, the terminal device can report a target location to an access network device without triggering a registration update, and update a first reference location based on the target location, so that the terminal device is always in a registration area, and does not frequently trigger a registration update. This helps reduce signaling overheads caused by triggering a registration update procedure, and further helps reduce power consumption of the terminal device.

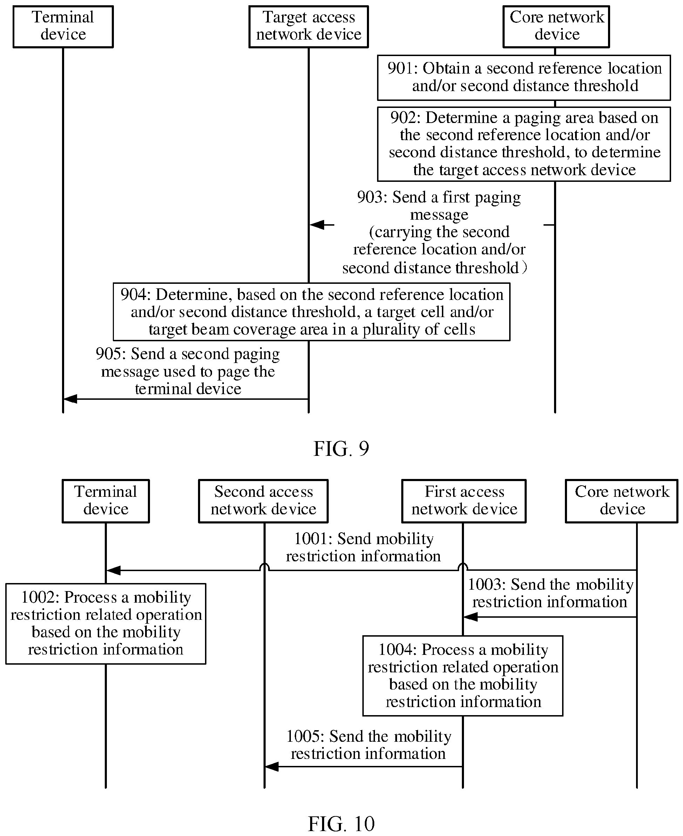

Optionally, for a specific implementation of determining, by the core network device, the paging area of the terminal device based on the first location information, refer to the following embodiment corresponding to FIG. 9. Details are not described herein again.

Step 209: The core network device determines, based on a first correspondence and the first location information, a TAC corresponding to the first location information.

In this embodiment, step 209 is an optional step.

The first location information may be represented by using geographical location information. After receiving the first location information indicating the target location, the core network device can determine a geographic area in which the target location is located. In this way, the core network device can determine, based on the first correspondence, a TAC corresponding to the geographic area, where the first correspondence is a correspondence between the geographic area and the TAC. For detailed descriptions of the first location information, refer to related content in the foregoing step 201. Details are not described again.

The core network device can convert the target location represented by using geographical location information such as latitude and longitude into a tracking area code TAC, so that some policies, implemented based on the TAC, in the core network device (for example, an SMF entity or a UPF entity is selected based on the TAC) can be connected to a registration update mechanism that is based on a reference location and a distance threshold. This helps improve compatibility between the registration update mechanism that is based on the reference location and the distance threshold and a registration update mechanism that is based on a TAC in the conventional technology, to enable a system to run stably.

The foregoing describes a main procedure of the information update method provided in this application. The following separately describes embodiments for different implementations of the first information.

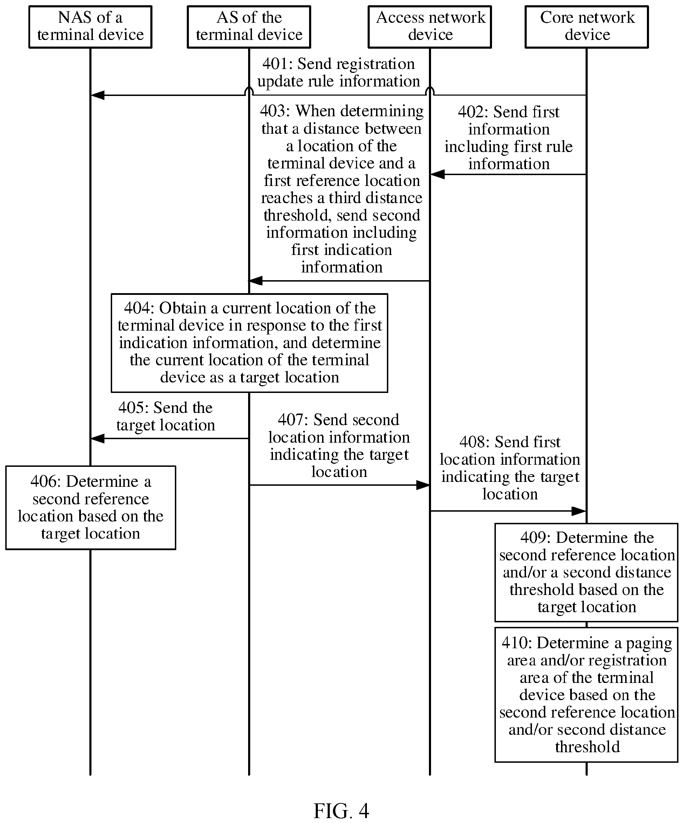

FIG. 4 shows an implementation when the first information includes first rule information. In this implementation, the access network device determines whether a distance between a location of the terminal device and a first reference location reaches a third distance threshold (for example, the distance threshold A described above). The core network device, the access network device, and the terminal device perform the following steps.

Step 401: The core network device sends registration update rule information to the NAS of the terminal device through the access network device. Correspondingly, the NAS of the terminal device receives the registration update rule information from the core network device through the access network device.

The registration update rule information indicates a registration update rule based on the first reference location and a first distance threshold. To be specific, when a distance between a location of the terminal device and the first reference location reaches the first distance threshold, the terminal device triggers a registration update procedure. The registration update rule information includes the first distance threshold. Optionally, the registration update rule information includes the first reference location. For explanations of the first reference location and the first distance threshold, refer to the related descriptions in step 201. Details are not described herein again.

It should be understood that when the registration update rule information does not include the first reference location, the terminal device uses a location sent when a registration update procedure is triggered last time as the first reference location.

It should be noted that the registration update rule information may be carried in a message sent by the core network device to the NAS of the terminal device. For example, in a registration update procedure before step 401, the NAS of the terminal device may send location information of the terminal device to the core network device by using a registration request (Registration Request) message, and then the core network device configures registration update rule information for the terminal device based on the location information of the terminal device, and sends the registration update rule information to the NAS of the terminal device by using a registration accept (Registration Accept) message. In addition, the registration update rule information may alternatively not be placed in the registration accept (Registration Accept) message, but is sent as an independent message to the NAS of the terminal device through the access network device. Specifically, a type of a message that carries the registration update rule information is not limited in this application.

Step 402: The core network device sends the first information including the first rule information to the access network device. Correspondingly, the access network device receives the first information including the first rule information from the core network device.

The first rule information is used to determine that a target location includes a location of the terminal device when a distance between the terminal device and the first reference location reaches the third distance threshold. It may alternatively be understood that the first rule information indicates to determine, as the target location, the location of the terminal device when the distance between the terminal device and the first reference location reaches the third distance threshold.

Optionally, the first rule information includes the third distance threshold, and the third distance threshold is less than the first distance threshold. In this case, the third distance threshold and the first rule information may be included in a message sent by the core network device to the access network device, or may be sent by the core network device to the access network device by using another message. This is not specifically limited herein.

In an implementation, the first rule information can indicate that a decision body for determining whether a location of the terminal device satisfies the first rule is the access network device, in other words, the first rule information can indicate that a device that determines whether a distance between the location of the terminal device and the first reference location reaches the third distance threshold is the access network device. Specifically, refer to the related descriptions of the example 1.1 in the manner 1 in step 201.

In another implementation, after receiving the first rule information, the access network device determines, based on a factor, for example, current network quality, that the access network device serves as a decision body, to be specific, the access network device determines whether a distance between a current location of the terminal device and the first reference location reaches the threshold. Specifically, refer to the related descriptions of the example 2.1 in the manner 2 in step 201.

It should be understood that the first rule information in this embodiment may use any one of the foregoing implementations. For beneficial effects of each implementation, refer to the related descriptions in step 201. Details are not described herein again.

In addition, in an actual application, the third distance threshold may be a distance threshold determined and delivered by the core network device, to be specific, the core network device determines a distance threshold according to a rule or algorithm as the third distance threshold. Alternatively, the third distance threshold may be a distance threshold that has been determined by the access network device and sent to the core network before step 401. Alternatively, the third distance threshold may be a distance threshold specified in a protocol. This is not specifically limited herein. In addition, in an actual application, the first reference location may be a location that is of the terminal device and that is newly reported by the terminal device before step 401, for example, a location reported by the terminal device to the core network device by triggering the registration update procedure before step 401. Alternatively, the first reference location may be a location that is determined according to a rule or algorithm and delivered by the core network device. Alternatively, the first reference location may be a location that is determined by the access network device according to a rule or algorithm at a historical moment and that has been sent to the core network device. Alternatively, the first reference location may be a location that is determined by the terminal device according to a rule or an algorithm and that has been sent to the access network device and/or the core network device. Alternatively, the first reference location may be a location calculated by the core network device based on a location historically reported by the terminal device and an algorithm. For example, a statistical value (for example, an average value) calculated based on two or more locations that are newly reported by the terminal device before step 401 is used as the first reference location. For another example, a location that is calculated by using a filtering algorithm (for example, an alpha (alpha) filtering algorithm) based on two or more locations that are newly reported by the terminal device before step 401 is used as the first reference location. In an actual application, the first reference location may alternatively be determined in another manner. This is not specifically limited herein.

Optionally, the first information further includes second indication information. For explanations of the second indication information, refer to the related descriptions in step 201. Details are not described herein again.

Step 403: When determining that a distance between a location of the terminal device and the first reference location reaches the third distance threshold, the access network device sends second information including first indication information to the AS of the terminal device. Correspondingly, the AS of the terminal device receives, from the access network device, the second information including the first indication information.

The first indication information indicates that a location that is of the terminal device and that is determined after the terminal device receives the first indication information is the target location.

Optionally, when the first information includes the second indication information, the second information also includes the second indication information. Optionally, the second indication information further indicates the AS of the terminal device to send the target location to the NAS of the terminal device. In this case, in step 403, when determining that the distance between the location of the terminal device and the first reference location reaches the third distance threshold, the second information sent by the access network device to the AS of the terminal device includes the first indication information, and further includes the second indication information.

For detailed descriptions of step 403, refer to related content in step 202. Details are not described again.

Step 404: The AS of the terminal device obtains a current location of the terminal device in response to the first indication information, and determines the current location of the terminal device as the target location.

In this step, after the AS of the terminal device receives the first indication information, the AS of the terminal device obtains the location of the terminal device, for example, by using a module such as a GPS or a GNSS that can obtain location information. In addition, the AS of the terminal device determines, as the target location, a 1^{st} location determined by the AS of the terminal device after the AS of the terminal device receives the first indication information or the location of the terminal device when the terminal device receives the first indication information.

In this embodiment, the AS of the terminal device can obtain the location of the terminal device based on the first indication information, and determine the obtained location of the terminal device as the target location. The terminal device generally exchanges signaling with the access network device through the AS of the terminal device, and interacts with the core network device through the NAS of the terminal device. Therefore, the AS of the terminal device determines the target location, so that the terminal device reports the target location to the access network device through the AS of the terminal device. In addition, this helps make a registration update mechanism that is based on a reference location and a distance threshold in the conventional technology compatible with the information update method provided in this application.

Step 405: The AS of the terminal device sends the target location to the NAS of the terminal device. Correspondingly, the NAS of the terminal device receives the target location from the AS of the terminal device.

In a possible implementation, step 405 may be triggered by the second indication information received by the AS of the terminal device. To be specific, after the AS of the terminal device receives the second indication information, the AS of the terminal device has a function of sending the target location to the NAS of the terminal device.

In another possible implementation, step 405 may alternatively be specified in a protocol. To be specific, it is specified in the protocol that after the AS of the terminal device receives the target location, the AS of the terminal device can send the target location of the terminal device to the NAS of the terminal device.

Step 406: The NAS of the terminal device determines a second reference location based on the target location.

The second reference location is used to trigger the registration update procedure.

In a possible implementation, the NAS of the terminal device directly uses the target location as the second reference location, and determines, based on the second reference location, whether to trigger the registration update procedure. Before step 406, the NAS of the terminal device determines, based on the first reference location and the first distance threshold, whether to trigger the registration update procedure. After step 406, the NAS of the terminal device determines, based on the second reference location and the first distance threshold, whether to trigger the registration update procedure. Therefore, it may be understood that the NAS of the terminal device replaces or updates the first reference location with the second reference location.

Then, the NAS of the terminal device uses the second reference location and the first distance threshold as parameters for triggering the registration update procedure. In other words, the NAS of the terminal device triggers the registration update procedure only after the NAS of the terminal device determines that a distance between a location of the terminal device and the second reference location reaches the first distance threshold.

Step 407: The AS of the terminal device sends, to the access network device, second location information indicating the target location. Correspondingly, the access network device receives, from the AS of the terminal device, the second location information indicating the target location.

It should be understood that, in this embodiment, a specific time sequence of step 407 and the foregoing step 405 and step 406 is not limited, and step 407 only needs to be performed after step 404. For example, step 407 may be performed after step 404 and before step 405. For another example, step 407 may be performed after step 405 and before step 406. For another example, step 407 may be performed after step 406. This is not specifically limited herein.

Step 408: The access network device sends, to the core network device, first location information indicating the target location. Correspondingly, the core network device receives, from the access network device, the first location information indicating the target location.

The second location information is information that is received by the access network device from the AS of the terminal device and that indicates the target location, and the first location information is information that needs to be sent by the access network device to the core network device and that indicates the target location. The first location information is determined by the access network device based on the second location information. For details, refer to the related descriptions in step 206. Details are not described herein again.

Step 409: The core network device determines the second reference location and/or a second distance threshold based on the target location.

In this embodiment, the core network device may determine the second reference location based only on the target location, or it may alternatively be understood that the core network device updates the first reference location based on the target location to obtain the second reference location; or the core network device may determine the second reference location and the second distance threshold based on the target location, or it may be understood that the core network device updates the first reference location and the first distance threshold based on the target location to obtain the second reference location and the second distance threshold.

Step 410: The core network device determines a paging area and/or registration area of the terminal device based on the second reference location and/or second distance threshold.

In a possible implementation, the core network device determines only the second reference location based on the target location, and does not determine any other distance threshold. In this case, the core network device determines the paging area and/or registration area of the terminal device based on the second reference location.

In another possible implementation, the core network device determines both the second reference location and the second distance threshold based on the target location. In this case, the core network device determines the paging area and/or registration area of the terminal device based on the second reference location and the second distance threshold.

For specific descriptions of step 409 and step 410, refer to the related descriptions in step 208. Details are not described herein again.

In this embodiment, because the terminal device does not need to perform a series of registration update procedures such as a registration request message and a registration accept message, the terminal device may determine the location of the terminal device after receiving the first indication information, and report only the location of the terminal device (namely, the second location information indicating the target location) to the access network device, so that the access network device reports the target location to the core network device. Therefore, this helps the core network device obtain the location information of the terminal device in a timely manner, and can further reduce signaling overheads caused by triggering the registration update procedure.

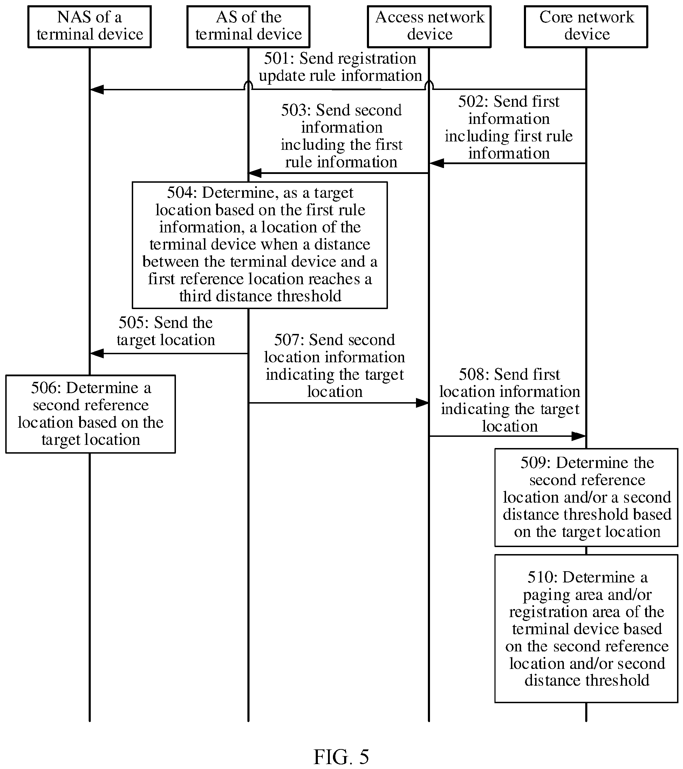

FIG. 5 shows another implementation when the first information includes first rule information. In this implementation, the access network device sends the first rule information to the terminal device, and the terminal device determines whether a distance between a location of the terminal device and a first reference location reaches a third distance threshold. The core network device, the access network device, and the terminal device perform the following steps.

Step 501: The core network device sends registration update rule information to the NAS of the terminal device through the access network device. Correspondingly, the NAS of the terminal device receives the registration update rule information from the core network device through the access network device.

In this embodiment, step 501 is similar to step 401. For details, refer to the related descriptions of step 401 in the embodiment corresponding to FIG. 4.

Step 502: The core network device sends the first information including the first rule information to the access network device. Correspondingly, the access network device receives the first information including the first rule information from the core network device.

The first rule information is used to determine that a target location includes a location of the terminal device when a distance between the terminal device and the first reference location reaches the third distance threshold. It may alternatively be understood that the first rule information indicates to determine, as the target location, the location of the terminal device when the distance between the terminal device and the first reference location reaches the third distance threshold.

Optionally, the first rule information includes the third distance threshold, and the third distance threshold is less than the first distance threshold. In this case, the third distance threshold and the first rule information may be included in a message sent by the core network device to the access network device, or may be sent by the core network device to the access network device by using another message. This is not specifically limited herein.

In an implementation, the first rule information can indicate that a decision body for determining whether a location of the terminal device satisfies a first rule is the terminal device, in other words, the first rule information can indicate that a device that determines whether a distance between the location of the terminal device and the first reference location reaches the third distance threshold is the terminal device. For example, the first rule information indicates the terminal device to determine, as the target location, the location of the terminal device when the distance between the terminal device and the first reference location reaches the third distance threshold. Specifically, refer to the related descriptions of the example 1.2 in the manner 1 in step 201.

In another implementation, the first rule information may alternatively not indicate that a decision body for determining whether a location of the terminal device satisfies a first rule is the terminal device or the access network device, but the determining is implemented by the access network device. In other words, after receiving the first rule information, the access network device determines, based on a factor, for example, current network quality, that the terminal device serves as the decision body, to be specific, the terminal device determines whether a distance between a current location of the terminal device and the first reference location reaches the threshold. Specifically, refer to the related descriptions of the example 2.2 in the manner 1 in step 201.

It should be understood that the first rule information in this embodiment may use any one of the foregoing implementations. For beneficial effects of each implementation, refer to the related descriptions in step 201. Details are not described herein again.

In addition, for a possible implementation of the third distance threshold, refer to the descriptions of the third distance threshold in step 402.

Optionally, the first information further includes second indication information. For explanations of the second indication information, refer to the related descriptions in step 201. Details are not described herein again.

Step 503: The access network device sends second information including the first rule information to the terminal device. Correspondingly, the terminal device receives, from the access network device, the second information including the first rule information.

In this embodiment, the terminal device determines whether a distance between a location of the terminal device and the first reference location reaches the third distance threshold. Therefore, after the access network device receives the first rule information and parses the first rule information, the access network device sends the first rule information to the AS of the terminal device. It should be noted that the first rule information sent by the access network device to the AS of the terminal device and the first rule information received by the access network device from the core network device may be the same or different in terms of content and/or forms. This is not limited herein.

Optionally, when the first information includes the second indication information, the second information also includes the second indication information. The second indication information indicates the NAS of the terminal device to update the first reference location based on the target location. It may alternatively be understood that the second indication information indicates the NAS of the terminal device to determine a trigger condition of a registration update procedure based on the target location. Optionally, the second indication information further indicates the AS of the terminal device to send the target location to the NAS of the terminal device.

Step 504: The AS of the terminal device determines, as the target location based on the first rule information, the location of the terminal device when the distance between the terminal device and the first reference location reaches the third distance threshold.

In this embodiment, the AS of the terminal device can determine a distance between a current location of the terminal device and the first reference location based on the first rule information. When the distance between the current location of the terminal device and the first reference location reaches the third distance threshold, the AS of the terminal device determines the current location of the terminal device as the target location.

For example, the AS of the terminal device may periodically or aperiodically obtain a current location of the terminal device based on a manner that is of determining a location of the terminal device and that is configured in the conventional technology. When a distance between the current location of the terminal device and the first reference location reaches the third distance threshold, the AS of the terminal device determines the current location of the terminal device as the target location.

Step 505: The AS of the terminal device sends the target location to the NAS of the terminal device. Correspondingly, the NAS of the terminal device receives the target location from the AS of the terminal device.

Step 506: The NAS of the terminal device determines a second reference location based on the target location.

Step 507: The AS of the terminal device sends, to the access network device, second location information indicating the target location. Correspondingly, the access network device receives, from the AS of the terminal device, the second location information indicating the target location.

Step 508: The access network device sends, to the core network device, first location information indicating the target location. Correspondingly, the core network device receives, from the access network device, the first location information indicating the target location.

The second location information is information that is received by the access network device from the AS of the terminal device and that indicates the target location, and the first location information is information that needs to be sent by the access network device to the core network device and that indicates the target location. The first location information is determined by the access network device based on the second location information. For details, refer to the related descriptions in step 206. Details are not described herein again.

Step 509: The core network device determines the second reference location and/or a second distance threshold based on the target location.

Step 510: The core network device determines a paging area and/or registration area of the terminal device based on the second reference location and/or second distance threshold.

In this embodiment, content of step 505 to step 510 is similar to that of step 405 to step 410 in the foregoing embodiment. For details, refer to the related descriptions of step 405 to step 410. Details are not described herein again.

In this embodiment, because the terminal device does not need to perform a series of registration update procedures such as a registration request message and a registration accept message, the terminal device may determine the target location when determining that the location of the terminal device satisfies the first rule information, and report only the location of the terminal device (namely, the second location information indicating the target location) to the access network device, so that the access network device reports the target location to the core network device. Therefore, this helps the core network device obtain the location information of the terminal device in a timely manner, and can further reduce signaling overheads caused by triggering the registration update procedure.

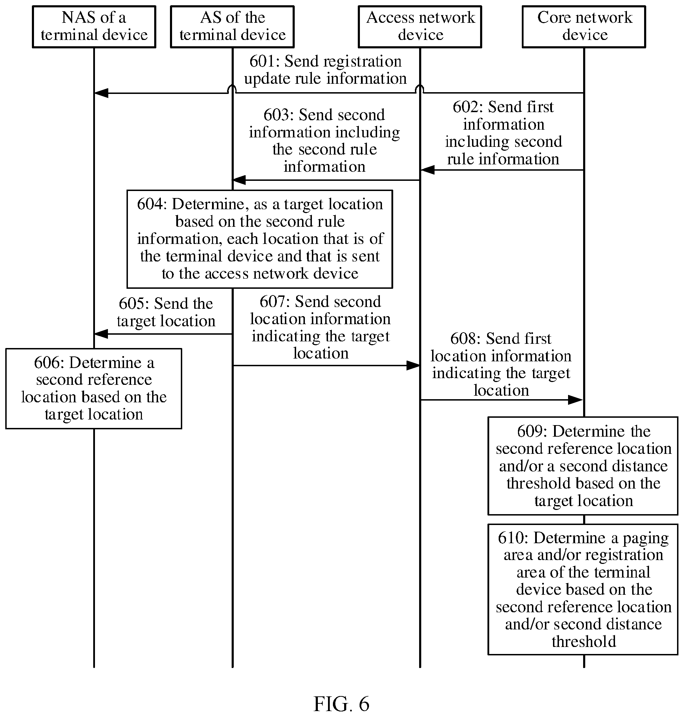

FIG. 6 shows an implementation when the first information includes second rule information. In this implementation, each location sent by the terminal device to the access network device is a target location, to be specific, the access network device determines, as the target location, each location that is of the terminal device and that is received from the terminal device. The core network device, the access network device, and the terminal device perform the following steps.

Step 601: The core network device sends registration update rule information to the NAS of the terminal device through the access network device. Correspondingly, the NAS of the terminal device receives the registration update rule information from the core network device through the access network device.

In this embodiment, step 601 is similar to step 401. For details, refer to the related descriptions of step 401 in the embodiment corresponding to FIG. 4.

Step 602: The core network device sends the first information including the second rule information to the access network device. Correspondingly, the access network device receives the first information including the second rule information from the core network device.

For explanations of the second rule information, refer to the related descriptions of the manner 2 in step 201. Details are not described herein again.

Optionally, the first information further includes second indication information. For explanations of the second indication information, refer to the related descriptions in step 201. Details are not described herein again.

Step 603: The access network device sends second information including the second rule information to the AS of the terminal device. Correspondingly, the terminal device receives, from the access network device, the second information including the second rule information.

The second rule information sent by the access network device to the AS of the terminal device and the second rule information received by the access network device from the core network device may be the same or different in terms of content and/or forms. This is not limited herein.

Optionally, when the first information includes the second indication information, the second information also includes the second indication information.

Step 604: The AS of the terminal device determines, based on the second rule information, each location that is of the terminal device and that is sent to the access network device as the target location.

It should be understood that, before the terminal device receives the second rule information, configuration information, for example, a handover-based measurement configuration, used to determine a location of the terminal device may be configured for the terminal device. Regardless of whether the terminal device receives the second rule information, the terminal device determines the location of the terminal device based on the configured configuration information that is used to determine the location of the terminal device. After the terminal device receives the second rule information, the terminal device determines each determined location as the target location, and sends each target location to the access network device.

Step 605: The AS of the terminal device sends the target location to the NAS of the terminal device. Correspondingly, the NAS of the terminal device receives the target location from the AS of the terminal device.

Step 606: The NAS of the terminal device determines a second reference location based on the target location.

Step 607: The AS of the terminal device sends, to the access network device, second location information indicating the target location. Correspondingly, the access network device receives, from the AS of the terminal device, the second location information indicating the target location.

Step 608: The access network device sends, to the core network device, first location information indicating the target location. Correspondingly, the core network device receives, from the access network device, the first location information indicating the target location. The first location information is determined by the access network device based on the second location information. For details, refer to the related descriptions in step 206. Details are not described herein again.

Step 609: The core network device determines the second reference location and/or a second distance threshold based on the target location.

Step 610: The core network device determines a paging area and/or registration area of the terminal device based on the second reference location and/or second distance threshold.

In this embodiment, content of step 605 to step 610 is similar to that of step 405 to step 410 in the foregoing embodiment. For details, refer to the related descriptions of step 405 to step 410. Details are not described herein again.

In this embodiment, the AS of the terminal device may report the location of the terminal device to the access network device based on the configured configuration information used to determine the location of the terminal device. However, in this embodiment, the access network device can report the location that is of the terminal device and that is received from the AS of the terminal device as the target location to the core network device, and does not need to report the location of the terminal device to the core network device through a series of registration update procedures such as a registration request message and a registration accept message. Therefore, signaling overheads can be reduced.

In this embodiment, the terminal device can report, based on the second rule information, each location obtained by the terminal device as the target location to the access network device, and the access network device can sense each location of the terminal device from the terminal device, and report each location from the terminal device as the target location to the core network device. Therefore, the location of the terminal device may be reported to the core network device without depending on the registration update procedure. This improves timeliness and accuracy of obtaining the terminal device by the core network device, and further reduces signaling overheads.

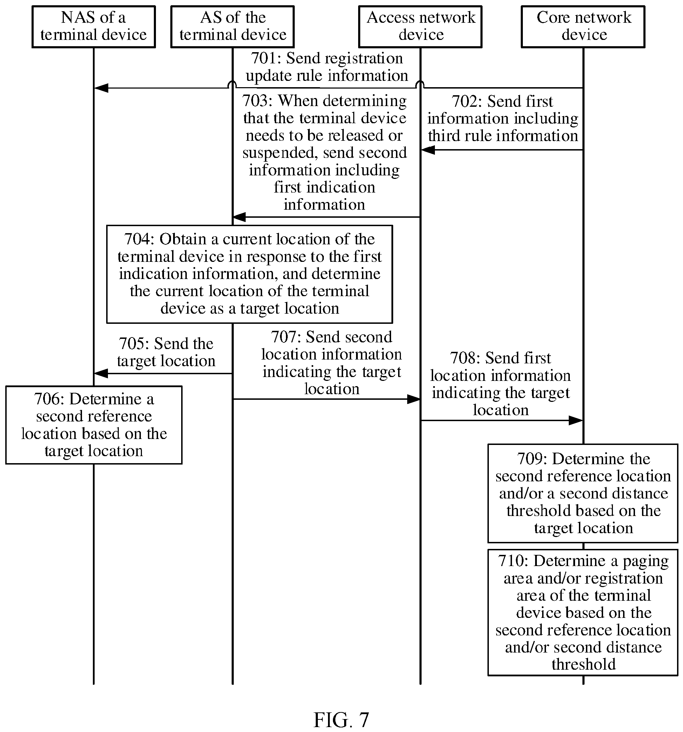

FIG. 7 shows an implementation when the first information includes third rule information. In this implementation, the access network device determines whether a distance between a location of the terminal device and a first reference location reaches a third distance threshold. The core network device, the access network device, and the terminal device perform the following steps.

Step 701: The core network device sends registration update rule information to the NAS of the terminal device through the access network device. Correspondingly, the NAS of the terminal device receives the registration update rule information from the core network device through the access network device.

In this embodiment, step 701 is similar to step 401. For details, refer to the related descriptions of step 401 in the embodiment corresponding to FIG. 4.

Step 702: The core network device sends the first information including the third rule information to the access network device. Correspondingly, the access network device receives the first information including the third rule information from the core network device.

For explanations of the third rule information, refer to the related descriptions of the manner 3 in step 201. Details are not described herein again.

Optionally, the first information further includes second indication information. For explanations of the second indication information, refer to the related descriptions in step 201. Details are not described herein again.

Step 703 : When determining that the terminal device needs to be released or suspended, the access network device sends second information including first indication information to the AS of the terminal device.

The first indication information indicates that a location that is of the terminal device and that is determined after the terminal device receives the first indication information is the target location.

Optionally, when the first information includes the second indication information, the second information also includes the second indication information. The second indication information indicates the NAS of the terminal device to update the first reference location based on the target location. It may alternatively be understood that the second indication information indicates the NAS of the terminal device to determine a trigger condition of a registration update procedure based on the target location. Optionally, the second indication information further indicates the AS of the terminal device to send the target location to the NAS of the terminal device.

For detailed descriptions of step 703, refer to related content in step 202. Details are not described again.

Step 704: The AS of the terminal device obtains a current location of the terminal device in response to the first indication information, and determines the current location of the terminal device as the target location.

Step 705: The AS of the terminal device sends the target location to the NAS of the terminal device. Correspondingly, the NAS of the terminal device receives the target location from the AS of the terminal device.

Step 706: The NAS of the terminal device determines a second reference location based on the target location.

Step 707: The AS of the terminal device sends, to the access network device, second location information indicating the target location. Correspondingly, the access network device receives, from the AS of the terminal device, the second location information indicating the target location.

Step 708: The access network device sends, to the core network device, first location information indicating the target location. Correspondingly, the core network device receives, from the access network device, the first location information indicating the target location. The first location information is determined by the access network device based on the second location information. For details, refer to the related descriptions in step 206. Details are not described herein again.

Step 709: The core network device determines the second reference location and/or a second distance threshold based on the target location.

Step 710: The core network device determines a paging area and/or registration area of the terminal device based on the second reference location and/or second distance threshold.

In this embodiment, content of step 705 to step 710 is similar to that of step 405 to step 410 in the foregoing embodiment. For details, refer to the related descriptions of step 405 to step 410. Details are not described herein again.

In this embodiment, the access network device can determine, based on the third rule information, whether the terminal device needs to be released or suspended, and the access network device can send the first indication information to the AS of the terminal device when the terminal device needs to be released or suspended. Therefore, before the AS of the terminal device enters a non-connected mode (for example, an inactive mode or an idle mode), the AS of the terminal device obtains a current location of the terminal device based on the first indication information as the target location, so that the access network device sends the target location to the core network device. A network side can obtain the target location of the terminal device before the terminal device is released or suspended, and determine the registration area based on the target location of the terminal device, to prevent the terminal device from triggering the registration update procedure because the terminal device leaves the registration area shortly after entering the idle mode or the inactive mode. Therefore, this helps reduce registration update frequency, and reduce signaling overheads.

It should be noted that if content sent in step 405 (or step 505, or step 605, or step 705), step 407 (or step 507, or step 607, or step 707), and step 408 (or step 508, or step 608, or step 708) in the foregoing embodiment may be replaced with the second reference location and/or second distance threshold, in other words, after the AS of the terminal device determines the target location, the AS of the terminal device may determine, based on the target location, the second reference location used to update the first reference location and the first distance threshold used to update the second distance threshold, step 405 (or step 505, or step 605, or step 705) may be replaced with that the AS of the terminal device sends the second reference location and/or second distance threshold to the NAS of the terminal device. In this case, in step 406 (or step 506, or step 606, or step 706), the NAS of the terminal device may directly update, based on the received second reference location and/or second distance threshold, the first reference location and/or first distance threshold configured by the core network device. In step 407 (or step 507, or step 607, or step 707), the AS of the terminal device sends the second reference location and/or second distance threshold to the access network device. In step 408 (or step 508, or step 608, or step 708), the access network device further sends the second reference location and/or second distance threshold to the core network device. In step 409 (or step 509, or step 609, or step 709), the core network device may directly update the first reference location and/or first distance threshold based on the received second reference location and/or second distance threshold. It should be noted that the foregoing embodiments corresponding to FIG. 2, FIG. 4, FIG. 5, FIG. 6, and FIG. 7 in this application may be mutually combined or referenced. For example, the embodiment corresponding to FIG. 7 may be separately combined with the embodiments corresponding to FIG. 2, FIG. 4, FIG. 5, and FIG. 6. It should be noted that when the embodiment corresponding to FIG. 7 is combined with the embodiment corresponding to FIG. 4, the first information sent by the core network device to the access network device includes the first rule information and the third rule information, and the first indication information sent by the access network device to the terminal device may be determined by the access network device based on the first rule information, or may be determined by the access network device based on the third rule information. The terminal device does not sense a reason for receiving the first indication information, and the terminal device can only learn that the location of the terminal device needs to be determined as the target location after receiving the first indication information. Optionally, the first indication information in the embodiment corresponding to FIG. 7 and the first indication information in the embodiment corresponding to FIG. 4 may be respectively represented by using different indication information. For example, the first indication information in the embodiment corresponding to FIG. 7 is represented by using indication information 1, and the first indication information in the embodiment corresponding to FIG. 4 is represented by using indication information 2. Optionally, the indication information 1 and the indication information 2 may further carry reasons for sending the indication information respectively. In this case, the terminal device can determine, based on the received first indication information, a rule based on which the access network device sends the first indication information to the terminal device.

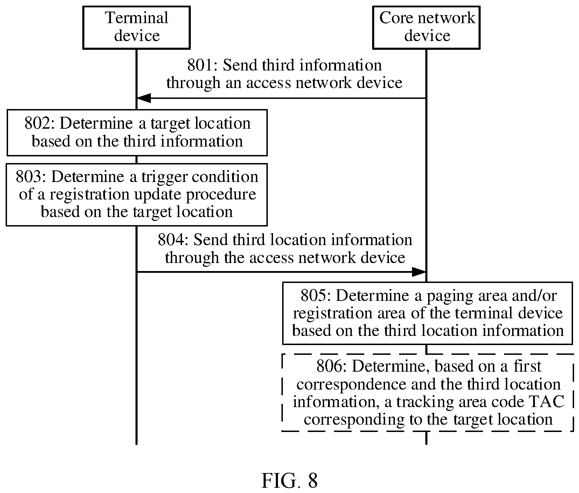

FIG. 8 shows another implementation of an information update method according to this application. In this implementation, an access network device does not sense a registration update procedure, and is only used to transparently transmit a message between a terminal device and a core network device. The core network device, the access network device, and the terminal device perform the following steps.

Step 801: The core network device sends third information to the terminal device through the access network device. Correspondingly, the terminal device receives the third information from the core network device through the access network device.

The third information indicates the terminal device to send third location information of the terminal device to the core network device through the access network device, and the third location information indicates a target location reported by the terminal device to the core network device. Specifically, the third information may be rule information, used to determine a rule for reporting the third location information by the terminal device to the core network device. In other words, after the terminal device receives the third information, the terminal device can determine, based on the third information, how to obtain the target location and how to report, to the core network device, the first location information indicating the target location.

In addition, the third location information is used by the core network device to determine a paging area and/or registration area of the terminal device. Optionally, the paging area and the registration area may be a same area. Optionally, the paging area and the registration area may be different areas. For example, the paging area includes the registration area and is larger than the registration area. For descriptions of the paging area and the registration area, refer to step 201. Details are not described herein again.

In addition, the target location is a location determined by the terminal device based on the third information, and the location is used by the terminal device to determine a trigger condition of the registration update procedure. Specifically, for descriptions of a processing process in which the terminal device determines the target location based on the third information, refer to step 802. Specifically, for descriptions of a processing process in which the terminal device determines, based on the target location, the trigger condition of the registration update procedure, refer to step 803.

Specifically, the target location may use any one of the following implementations:
In a possible implementation, the target location is a location that is of the terminal device and that is obtained before the registration update procedure is triggered based on a first reference location and a first distance threshold.

In another possible implementation, a distance between the target location of the terminal device and the first reference location is less than the first distance threshold.

It should be noted that the target location may use any one of the foregoing implementations, or may satisfy both of the foregoing two implementations. This is not specifically limited herein. For explanations of the target location, the first reference location, and the first distance threshold, refer to the related descriptions in step 201. Details are not described herein again.

It should be understood that a difference between the third information in this embodiment and the first information in any one of the embodiments corresponding to FIG. 2 and FIG. 4 to FIG. 7 lies in that the access network device does not sense the third information (to be specific, the access network device does not sense content of the third information), but the access network device senses the first information (to be specific, the access network device senses content of the first information).

It should be understood that when the third information includes different content and the third information indicates different rules, the terminal device obtains the foregoing target location in different manners. The following separately provides descriptions.

In a possible implementation, the third information includes third indication information, the third indication information indicates the terminal device to send the target location to the core network device through the access network device, and the target location includes a location that is of the terminal device and that is determined by the terminal device within a preset time range before the terminal device is released. It may alternatively be understood that the third indication information indicates that the terminal device sends the location of the terminal device to the core network device through the access network device within the preset time range before the terminal device is released, and the location obtained within the preset time range before the terminal device is released is the target location.

That the terminal device is released means that the terminal device enters an idle mode from a connected mode.

Specifically, the core network device sends the third indication information to a NAS of the terminal device through the access network device. Correspondingly, the NAS of the terminal device receives the third indication information from the core network device through the access network device.

In this embodiment, the core network device indicates the terminal device to report the location of the terminal device through the access network device before the terminal device is released. This helps the core network device learn of the location of the terminal device. This helps the core network device perform registration area management and/or paging area management on the terminal device.

In another possible implementation, the third information includes fourth indication information, and the fourth indication information indicates that a location determined after the terminal device receives the fourth indication information is the target location. For example, the location that is of the terminal device and that is determined after the terminal device receives the fourth indication information may be a 1^{st} location determined after the terminal device receives the fourth indication information, or may be a location of the terminal device when the terminal device receives the fourth indication information.

When the terminal device is in the connected mode, the core network device can communicate with the NAS of the terminal device. Therefore, the core network device can sense whether the terminal device is to be released. When the core network device determines that the terminal device needs to be released, the core network device sends the fourth indication information to the NAS of the terminal device through the access network device, so that the NAS of the terminal device reports a location of the terminal device to the core network device through the access network device before the terminal device is released. That the core network device determines that the terminal device needs to be released may be that the access network device requests the core network device to release the terminal device, or may be that the core network device autonomously determines that the terminal device needs to be released. This is not specifically limited herein. In this implementation, the terminal device obtains the current location of the terminal device as the target location only after receiving the fourth indication information. This helps reduce complexity of the terminal device.

In another possible implementation, the third information includes fourth rule information, the fourth rule information indicates the terminal device to determine the target location based on fourth indication information from the core network device, and the fourth indication information indicates the terminal device to send a current location of the terminal device to the core network device through the access network device.

In this implementation, the core network device can send the fourth indication information to the NAS of the terminal device when the terminal device is to be released, and the core network device further sends the fourth rule information to the NAS of the terminal device before sending the fourth indication information, so that the NAS of the terminal device can learn of a reason for receiving the fourth indication information. It should be noted that in this implementation, the fourth rule information is sent before the fourth indication information. Optionally, the core network device sends the fourth rule information to the NAS of the terminal device by using different messages.

Step 802: The terminal device determines the target location based on the third information.

Specifically, the NAS of the terminal device determines the target location based on the third information. When implementations of the third information are different, the NAS of the terminal device determines the target location in different manners.

In a possible implementation, the third information includes the third indication information. In this case, the NAS of the terminal device can determine whether the terminal device needs to be released. When the NAS of the terminal device determines that the terminal device needs to be released, the NAS of the terminal device obtains a location of the terminal device, uses the location obtained by the NAS of the terminal device as the target location, and sends the target location to the core network device through the access network device.

In another possible implementation, the third information includes the fourth indication information, and the fourth indication information indicates that a location determined after the NAS of the terminal device receives the fourth indication information is the target location. In this case, if the NAS of the terminal device receives the fourth indication information from the core network device, it indicates that the core network device has determined that the terminal device is to be released, and the NAS of the terminal device determines, as the target location, a location that is of the terminal device and that is obtained after the NAS of the terminal device receives the fourth indication information.

It should be understood that the NAS of the terminal device may obtain the current location of the terminal device by using a module such as a GPS or a GNSS, and determine the obtained current location of the terminal device as the target location. The NAS of the terminal device may alternatively obtain the current location of the terminal device from an AS of the terminal device. In addition, the NAS of the terminal device may alternatively reuse the location that is of the terminal device and that is determined by the terminal device within the preset time range before the terminal device is released. This is not specifically limited herein.

Step 803: The terminal device determines the trigger condition of the registration update procedure based on the target location.

Specifically, the NAS of the terminal device determines a second reference location based on the target location, where the second reference location is used to trigger the registration update procedure. It may alternatively be understood that the NAS of the terminal device updates the first reference location based on the target location, to obtain the second reference location. For details, refer to the related descriptions in step 204. Details are not described herein again.

Step 804: The terminal device sends the third location information to the core network device through the access network device. Correspondingly, the core network device receives the third location information from the terminal device through the access network device.

Specifically, the NAS of the terminal device sends, to the core network device through the access network device, the third location information indicating the target location. Correspondingly, the core network device receives, from the NAS of the terminal device through the access network device, the third location information indicating the target location.

It should be understood that a specific time sequence of step 803 and step 804 is not limited. In other words, the terminal device may first perform step 803 and then perform step 804, or may first perform step 804 and then perform step 803, or may simultaneously perform step 803 and step 804. This is not specifically limited in this embodiment.

Step 805: The core network device determines the paging area and/or registration area of the terminal device based on the third location information.

In this embodiment, content of step 805 is similar to that of step 208 in the foregoing embodiment. For details, refer to the related descriptions of step 208. Details are not described herein again.

Step 806: The core network device determines, based on a first correspondence and the third location information, a TAC corresponding to the third location information.

In this embodiment, step 806 is an optional step.

The third location information may be represented by using geographical location information. A manner in which the third location information is represented by using the geographical location information is similar to a manner in which the first location information is represented by using the geographical location information. For details, refer to the related descriptions in step 201.

Content of step 806 is similar to that of step 209 in the foregoing embodiment. For details, refer to the related descriptions of step 209. Details are not described herein again.

According to the implementation in FIG. 8, the NAS of the terminal device can obtain a current location of the terminal device before the terminal device is released, and determine the location as the target location; or the NAS of the terminal device can obtain the location of the terminal device as indicated by the fourth indication information to determine the target location. The NAS of the terminal device and the core network device can directly exchange the target location, the NAS of the terminal device and the core network device separately update the first reference location based on the target location. Therefore, this helps reduce frequency of triggering the registration update procedure by the NAS of the terminal device, and helps prolong duration between triggering of registration update procedures.

In addition, based on the information update method provided in this application, a paging method is provided. FIG. 9 is a main procedure of the paging method according to this application. The core network device, the access network device, and the terminal device perform the following steps.

Step 901: The core network device obtains a second reference location and/or second distance threshold.

The second reference location is a new reference location determined based on a target location. For example, the second reference location is a new reference location obtained by updating a first reference location based on the target location. For another example, the second reference location is directly equal to the target location. The second reference location may be the second reference location determined according to any one of the embodiments corresponding to FIG. 2, FIG. 4, FIG. 5, FIG. 6, FIG. 7, and FIG. 8.

In addition, the second distance threshold is a new distance threshold determined based on the target location. For example, the second distance threshold is a new distance threshold obtained by updating a first distance threshold based on the target location. For another example, the second distance threshold is equal to the first distance threshold. Optionally, the second distance threshold is greater than the first distance threshold. The second distance threshold may be the second distance threshold determined according to any one of the embodiments corresponding to FIG. 2, FIG. 4, FIG. 5, FIG. 6, FIG. 7, and FIG. 8.

Step 902: The core network device determines a paging area based on the second reference location and/or second distance threshold, to determine a target access network device used to page the terminal device.

The target access network device is an access network device that is determined by the core network device and that can serve the terminal device currently. The core network device may determine only one target access network device, or may determine a plurality of target access network devices. This is not specifically limited herein. It should be noted that, because the terminal device can move, the target access network device does not necessarily include the access network device that provides the target location for the core network device in the foregoing embodiment.

In a possible implementation, the core network device determines a first geographic area based on the second reference location and/or second distance threshold; and the core network device determines an access network device located in the first geographic area as the target access network device.

In an implementation of this implementation, if the core network device determines only the second reference location based on the target location, the core network device determines the first geographic area based on the second reference location and the first distance threshold. For example, the core network device determines, as the first geographic area, a circular area whose circle center is the second reference location and whose radius is the first distance threshold. For another example, the core network device determines, as the first geographic area, a rectangular area whose geometric center is the second reference location and whose distance from the geometric center to a side of the rectangular area is the first distance threshold.

In another implementation of this implementation, if the core network device determines the second reference location and the second distance threshold based on the target location, the core network device determines the first geographic area based on the second reference location and the second distance threshold. For example, the core network device determines, as the first geographic area, a circular area whose circle center is the second reference location and whose radius is the second distance threshold. For another example, the core network device determines, as the first geographic area, a rectangular area whose geometric center is the second reference location and whose distance from the geometric center to a side of the rectangular area is the second distance threshold.

In another possible implementation, if the core network device determines the second distance threshold based on a TAC list, the core network device determines the first geographic area based on the TAC list and the second distance threshold. For a method for determining the TAC list and the second distance threshold, refer to step 208. Details are not described herein again. After the core network device receives, from the access network device, a new TAC list determined by the access network device based on location information reported by the terminal device, the core network device updates the TAC list. Further, the core network device updates the first geographic area based on the updated TAC list and the second distance threshold. The location information reported by the terminal device may indicate the target location that may be used to update the first reference location, or may indicate another location (or referred to as a common location) that is of the user equipment and that is not used to update the first reference location.

In another possible implementation, if the core network device does not determine the second distance threshold based on the TAC list, the core network device determines the first geographic area based on the TAC list and the first distance threshold. A method for determining a TAC list includes the method in step 208, and further includes: The terminal device reports a common location (non-target location); the access network device determines the TAC list based on the common location reported by the terminal device, and reports the list to the core network device; and the core network device receives and determines the TAC list.

It should be understood that in an actual application, the terminal device may determine the first geographic area in any one of the foregoing implementations.

In another possible implementation, the core network device obtains location change information of the terminal device, where the location change information indicates a movement direction and/or a movement speed of the terminal device; the core network device determines a second geographic area based on the location change information and at least one of the second reference location and the second distance threshold; and the core network device determines an access network device located in the second geographic area as the target access network device.

Optionally, the core network device may first determine the first geographic area based on the second reference location and/or second distance threshold, and then the core network device determines the second geographic area based on the location change information and the first geographic area. For example, when the terminal device moves along a first direction and at a first speed, the core network device moves the first geographic area for a distance based on the first direction and the first speed, to obtain the second geographic area.

It should be noted that the second geographic area is more accurate than the first geographic area, but the second geographic area is not necessarily smaller than the first geographic area.

It should be further noted that both the first geographic area and the second geographic area are represented by using geographic areas instead of areas corresponding to TACs, and the geographic areas do not need to be converted into TACs or areas corresponding to the TACs.

Step 903: The core network device sends a first paging message to the target access network device.

The first paging message carries the second reference location and/or second distance threshold, so that the target access network device further selects a paging area based on the second reference location and/or second distance threshold, so that the terminal device can be paged more accurately.

It should be understood that when the target access network device is a plurality of access network devices, the core network device sends the first paging message to each target access network device. Correspondingly, the target access network device receives the first paging message from the core network device.

Step 904: The target access network device determines, based on the second reference location and/or second distance threshold, a target cell and/or a target beam coverage area in a plurality of cells served by the target access network device.

There may be the plurality of cells served by the target access network device, and the target access network device may select one or more cells from the plurality of cells as the target cell based on the second reference location and/or second distance threshold. For example, the target access network device may select a cell close to the second reference location as the target cell.

Optionally, one beam coverage area is less than a coverage area of one cell. One cell may have one or more beam coverage areas. The target access network device may further select one or more beam coverage areas from one or more cells. For example, the target access network device may select a beam coverage area close to the second reference location as the target beam coverage area.

Step 905: The access network device sends a second paging message used to page the terminal device.

Specifically, the access network device sends the paging message in the target cell and/or the target beam coverage area, where the paging message is used to page the terminal device.

In this embodiment, the core network device can select the target access network device from a plurality of access network devices based on the second reference location and/or second distance threshold, and then the target access network device can select the target cell and/or the target beam coverage area from the plurality of cells based on the second reference location and/or second distance threshold. Therefore, the access network device may page the terminal device in a small range. Therefore, signaling overheads can be reduced, air interface resources can be saved, and system performance can be improved.

In addition, this application further provides a mobility restriction information processing method. FIG. 10 shows a main procedure of the mobility restriction information processing method according to this application. A core network device, an access network device, and a terminal device perform the following steps.

Step 1001: The core network sends mobility restriction information to the terminal device through the access network device. Correspondingly, the terminal device receives the mobility restriction information from the core network device through the access network device.

The mobility restriction information includes forbidden area (Forbidden Area) information, service area restriction (Service Area Restriction) information, and the like. The forbidden area information includes a forbidden area. In the forbidden area, the terminal device is not allowed to initiate any communication with a network side. In addition, the service area restriction information includes a restricted service area and/or an unrestricted service area. In the restricted service area, the terminal device may not be allowed to initiate a service request, or the terminal device may not be allowed to initiate session-related signaling.

In this embodiment, the mobility restriction information is geographical location-based area information. For example, the mobility restriction information may be represented by using a geographical location area such as a country area, an administrative region, or a grid determined based on longitude and latitude, and does not need to be converted into a TAI or an area corresponding to the TAI. A network side device (for example, the access network device or the core network device) may directly store geographical location area information related to mobility restriction, instead of TAI related information. For example, in this embodiment, the movement restriction information may be a geographical location-based area movement restriction list. In comparison with the TAI, the geographical location-based area information can describe a smaller area. Therefore, this helps improve precision of performing mobility restriction management on the terminal device by the network side (the access network device or the core network device), and further helps be compatible with a registration update method that is based on a reference location and a distance threshold.

It should be noted that the mobility restriction information may be sent by the core network device to an NSA layer of the terminal device by using a NAS message. For example, the mobility restriction information may be carried in a registration accept (Registration Accept) message and sent to the NAS of the terminal device.

Step 1002: The terminal device processes a mobility restriction related operation based on the mobility restriction information.

Specifically, the NAS of the terminal device uses the mobility restriction information to process related operations such as forbidden area and/or service area restriction.

In a possible implementation, the mobility restriction information includes the service area restriction information, and the service area restriction information includes the restricted service area. In this case, the terminal device may perform the following movement restriction related operations.

In an implementation of this implementation, the terminal device neither initiates a session-related procedure nor initiates a service request (service request, SR) in the restricted service area.

In another implementation of this implementation, if the terminal device initiates an SR or a session-related procedure, the core network device (for example, an AMF entity) may determine whether the terminal device is currently in the restricted service area. If the terminal device is located in the restricted service area, the AMF entity rejects the procedure initiated by the terminal device. In addition, an SMF entity that manages a session further subscribes to, from the AMF entity, a notification that the terminal device moves into the restricted service area. When the terminal device moves into the restricted service area, the SMF entity initiates session deactivation.

In another possible implementation, the movement restriction information includes the forbidden area information, and the forbidden area information includes the forbidden area. In this case, the terminal device may perform the following movement restriction related operations.

In an implementation of this implementation, if the terminal device determines that the terminal device is in the forbidden area, the terminal device does not actively initiate a connection.

In another implementation of this implementation, if the terminal device initiates a connection, the core network device (for example, the AMF entity) may reject access of the terminal device based on a location of the terminal device.

Step 1003: The core network device sends mobility restriction information to a first access network device. Correspondingly, the first access network device receives the mobility restriction information from the core network device.

The first access network device may be an access network device that serves the terminal device, or the first access network device is an access network device on which the terminal device currently camps. The mobility restriction information is geographical location-based area information.

Step 1004: The first access network device processes a mobility restriction related operation based on the mobility restriction information.

Specifically, the first access network device uses the mobility restriction information to process related operations such as forbidden area and/or service area restriction.

In a possible implementation, the related operation of processing the forbidden area and/or service area restriction includes: The first access network device determines, based on the forbidden area information and/or the service area restriction information in the mobility restriction information, whether to release the terminal device or select a target cell for the terminal device. For example, in a connected mode, the first access network device determines, based on GNSS location information of the terminal device, whether the terminal device is located in the forbidden area and/or the restricted service area. If the terminal device is in the forbidden area and/or the restricted service area, the first access network device releases a connection to the terminal device, or the first access network device sends, to the core network device (for example, the AMF entity), a notification indicating that the terminal device moves into the forbidden area and/or the restricted service area.

Step 1005: The first access network device sends mobility restriction information to a second access network device. Correspondingly, the second access network device receives the mobility restriction information from the first access network device. The mobility restriction information is geographical location-based area information.

The second access network device includes an access network device that serves the terminal device after the terminal device is handed over. It may be understood that the terminal device is handed over from the first access network device to the second access network device, to be specific, the first access network device is a source access network device, and the second access network device is a target access network device.

For example, the mobility restriction information may be carried in a handover request (HandoverRequest) message sent by the first access network device to the second access network device.

In an NTN system, a satellite serves as a relay or an access network device, and uses geographical location area information to indicate mobility restriction information. In comparison with a TAI, geographical location-based area information can describe a smaller area. Therefore, this helps perform mobility restriction management on a terminal device more accurately, and avoids a problem that mobility restriction fails because an area (for example, a forbidden area, a restricted service area, or an unrestricted service area) included in mobility restriction information is excessively small because a beam coverage area of the satellite is excessively large.

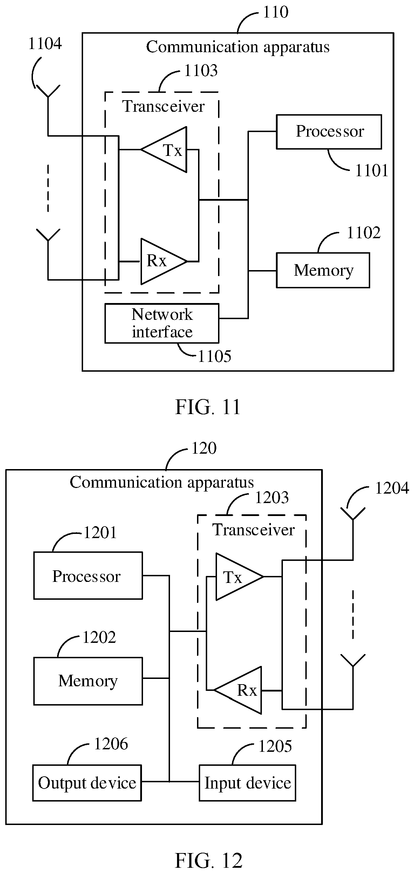

FIG. 11 is a diagram of a structure of a communication apparatus 110 according to an embodiment. It should be understood that the access network device in the method embodiment corresponding to FIG. 2, FIG. 4, FIG. 5, FIG. 6, FIG. 7, FIG. 8, FIG. 9, or FIG. 10 may be based on the structure of the communication apparatus 110 shown in FIG. 11 in this embodiment. It should be further understood that when an access network device of a subsequently evolved standard performs the method in embodiments of this application, the access network device of the subsequently evolved standard may also use the structure of the communication apparatus 110 shown in FIG. 11 in this embodiment.

The communication apparatus 110 includes at least one processor 1101, at least one memory 1102, at least one transceiver 1103, at least one network interface 1105, and one or more antennas 1104. The processor 1101, the memory 1102, the transceiver 1103, and the network interface 1105 are connected through a connection apparatus, and the antenna 1104 is connected to the transceiver 1103. The connection apparatus may include various types of interfaces, transmission cables, buses, or the like. This is not limited in this embodiment.

The memory 1102 is mainly configured to store a software program and data. The memory 1102 may exist independently, and is connected to the processor 1101. Optionally, the memory 1102 and the processor 1101 may be integrated, for example, integrated into one or more chips. The memory 1102 can store program code for execution of the technical solutions in embodiments of this application, and the processor 1101 controls the execution. Various types of executed computer program code may also be considered as drivers of the processor 1101. It should be understood that FIG. 11 in this embodiment shows only one memory and one processor. However, in an actual application, the communication apparatus 110 may include a plurality of processors or a plurality of memories. This is not specifically limited herein. In addition, the memory 1102 may also be referred to as a storage medium, a storage device, or the like. The memory 1102 may be a storage element (namely, an on-chip storage element) located on a same chip as the processor, or an independent storage element. This is not limited in this embodiment of this application.

In this embodiment, the transceiver 1103 may be configured to support receiving or sending of a radio frequency signal between the communication apparatus 110 and a terminal device, and the transceiver 1103 may be connected to the antenna 1104. The transceiver 1103 includes a transmitter Tx and a receiver Rx. Specifically, the one or more antennas 1104 may receive a radio frequency signal. The receiver Rx of the transceiver 1103 is configured to: receive the radio frequency signal from the antenna 1104, convert the radio frequency signal into a digital baseband signal or a digital intermediate frequency signal, and provide the digital baseband signal or the digital intermediate frequency signal to the processor 1101, so that the processor 1101 performs further processing on the digital baseband signal or the digital intermediate frequency signal, for example, demodulation processing and decoding processing. In addition, the transmitter Tx in the transceiver 1103 is further configured to: receive a modulated digital baseband signal or digital intermediate frequency signal from the processor 1101, convert the modulated digital baseband signal or digital intermediate frequency signal into a radio frequency signal, and send the radio frequency signal through the one or more antennas 1104. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing and the analog-to-digital conversion processing is adjustable. The transmitter Tx may selectively perform one or more levels of frequency up-mixing processing and digital-to-analog conversion processing on the modulated digital baseband signal or digital medium-frequency signal to obtain the radio frequency signal. A sequence of the frequency up-mixing processing and the digital-to-analog conversion processing is adjustable. The digital baseband signal and the digital intermediate frequency signal may be collectively referred to as digital signals.

It should be understood that the transceiver 1103 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver machine, an input interface, a receiving circuit, or the like. The sending unit may be referred to as a transmitter machine, a transmitter, a transmitter circuit, or the like.

In addition, the processor 1101 is mainly configured to process a communication protocol and communication data, control an entire network device, execute a software program, and process data of the software program, for example, configured to support the communication apparatus 110 in performing an action described in the foregoing embodiment. The communication apparatus 110 may include a baseband processor and a central processing unit. The baseband processor is mainly configured to process a communication protocol and communication data. The central processing unit is mainly configured to control the entire communication apparatus 110, execute a software program, and process data of the software program. Functions of the baseband processor and the central processing unit may be integrated into the processor 1101 in FIG. 11. A person skilled in the art may understand that the baseband processor and the central processing unit may alternatively be processors independent of each other, and are interconnected by using a technology such as a bus. A person skilled in the art may understand that the communication apparatus 110 may include a plurality of baseband processors to adapt to different network standards, the communication apparatus 110 may include a plurality of central processing units to enhance a processing capability of the communication apparatus 110, and the components in the communication apparatus 110 may be connected through various buses. The baseband processor may also be expressed as a baseband processing circuit or a baseband processing chip. The central processing unit may also be expressed as a central processing circuit or a central processing chip. A function of processing the communication protocol and the communication data may be embedded in the processor, or may be stored in the memory in a form of a software program, and the processor executes the software program to implement a baseband processing function.

In addition, the network interface 1105 is configured to enable the communication apparatus 110 to connect to another communication apparatus through a communication link. Specifically, the network interface 1105 may include a network interface between the communication apparatus 110 and a core network element, for example, an S1 interface. Alternatively, the network interface 1105 may include a network interface between the communication apparatus 110 and another network device (for example, another access network device or another core network element), for example, an X2 interface or an Xn interface.

In a possible implementation, the communication apparatus 110 is configured to perform the method in the embodiment corresponding to FIG. 2, FIG. 4, FIG. 5, FIG. 6, FIG. 7, FIG. 8, FIG. 9, or FIG. 10. Specifically, in the communication apparatus 110, the processor 1101 is configured to control the transceiver 1103 to receive first information from a core network device, where the first information indicates the access network device to send first location information of the terminal device to the core network device. Then, the processor 1101 determines the first location information. In addition, the processor 1101 is further configured to control the transceiver 1103 to send the first location information to the core network device, where the first location information is used by the core network device to determine a paging area and/or registration area of the terminal device.

In a possible implementation, the first location information includes a target location, and the target location is a location that is of the terminal device and that is obtained before a registration update procedure is triggered based on a first reference location and a first distance threshold.

In a possible implementation, a distance between the target location and the first reference location is less than the first distance threshold.

In a possible implementation, the paging area and/or registration area of the terminal device are/is represented by using a second reference location and/or second distance threshold, and the second reference location and the second distance threshold are determined based on the first location information.

In a possible implementation, the processor 1101 is specifically configured to: send second information to the terminal device based on the first information, where the second information indicates the terminal device to send second location information to the access network device; and determine the first location information based on the second location information received from the terminal device, where the second location information includes the target location, and the target location is a location that is of the terminal device and that is determined by the terminal device based on the second information.

In a possible implementation, the first information includes first rule information, the first rule information is used to determine that the target location includes a location of the terminal device when a distance between the terminal device and the first reference location reaches a third distance threshold, and the third distance threshold is less than the first distance threshold.

In a possible implementation, the second information includes first indication information, and the first indication information indicates that a location that is of the terminal device and that is determined after the terminal device receives the first indication information is the target location. The processor 1101 is specifically configured to: when determining, based on the first rule information, that the distance between the location of the terminal device and the first reference location reaches the third distance threshold, control the transceiver 1103 to send the second information to the terminal device.

In a possible implementation, the second information includes the first rule information.

In a possible implementation, the first information includes second rule information, the second rule information is used to determine that the target location includes each location that is of the terminal device and that is sent by the terminal device to the access network device, and the second information includes the second rule information. The transceiver 1103 is specifically configured to receive each location of the terminal device from the terminal device. The processor 1101 is specifically configured to determine, as the target location, each location that is of the terminal device and that is received from the terminal device.

In a possible implementation, the first information includes third rule information, and the third rule information is used by the access network device to determine that the target location includes a location that is of the terminal device and that is obtained within a preset time range before the terminal device is released or suspended.

In a possible implementation, the second information includes first indication information, and the first indication information indicates that a location that is of the terminal device and that is determined after the terminal device receives the first indication information is the target location. The processor 1101 is specifically configured to: when determining, based on the third rule information, that the terminal device needs to be released or suspended, control the transceiver 1103 to send the second information to the terminal device.

In a possible implementation, the second distance threshold is greater than the first distance threshold.

In a possible implementation, the first information further includes second indication information, the second information further includes the second indication information, and the second indication information further indicates an AS of the terminal device to send the target location to a NAS of the terminal device.

In a possible implementation, the transceiver 1103 is further configured to receive a first paging message from the core network device, where the first paging message includes the second reference location and/or second distance threshold; the processor 1101 is further configured to determine, based on the second reference location and/or second distance threshold, a target cell and/or a target beam coverage area in a plurality of cells served by the access network device; and the transceiver 1103 is further configured to send, to the target cell and/or the target beam coverage area, a second paging message used to page the terminal device.

It should be noted that, for specific implementations and beneficial effects of this embodiment, refer to the method of the access network device in the foregoing embodiment. Details are not described herein again.

FIG. 12 is a diagram of a structure of another communication apparatus 120 according to an embodiment. It should be understood that the terminal device in the method embodiment corresponding to FIG. 2, FIG. 4, FIG. 5, FIG. 6, FIG. 7, FIG. 8, FIG. 9, or FIG. 10 may be based on the structure of the communication apparatus 120 shown in FIG. 120 in this embodiment.

The communication apparatus 120 includes at least one processor 1201, at least one memory 1202, and at least one transceiver 1203. The processor 1201, the memory 1202, and the transceiver 1203 are connected. Optionally, the communication apparatus 120 may further include an input device 1205, an output device 1206, and one or more antennas 1204. The antenna 1204 is connected to the transceiver 1203, and the input device 1205 and the output device 1206 are connected to the processor 1201.

In this embodiment, the memory 1202 is mainly configured to store a software program and data. The memory 1202 may exist independently, and is connected to the processor 1201. Optionally, the memory 1202 and the processor 1201 may be integrated, for example, integrated into one or more chips. The memory 1202 can store program code for execution of the technical solutions in embodiments of this application, and the processor 1201 controls the execution. Various types of executed computer program code may also be considered as drivers of the processor 1201. It should be understood that FIG. 12 in this embodiment shows only one memory and one processor. However, in an actual application, the communication apparatus 120 may include a plurality of processors or a plurality of memories. This is not specifically limited herein. In addition, the memory 1202 may also be referred to as a storage medium, a storage device, or the like. The memory 1202 may be a storage element (namely, an on-chip storage element) located on a same chip as the processor, or an independent storage element. This is not limited in this embodiment of this application.

In this embodiment, the transceiver 1203 may be configured to support receiving or sending of a radio frequency signal between the communication apparatus 120 and an access network device, and the transceiver 1203 may be connected to the antenna 1204. The transceiver 1203 includes a transmitter Tx and a receiver Rx. Specifically, the one or more antennas 1204 may receive a radio frequency signal. The receiver Rx of the transceiver 1203 is configured to: receive the radio frequency signal from the antenna 1204, convert the radio frequency signal into a digital baseband signal or a digital intermediate frequency signal, and provide the digital baseband signal or the digital intermediate frequency signal to the processor 1201, so that the processor 1201 performs further processing on the digital baseband signal or the digital intermediate frequency signal, for example, demodulation processing and decoding processing. In addition, the transmitter Tx in the transceiver 1203 is further configured to: receive a modulated digital baseband signal or digital intermediate frequency signal from the processor 1201, convert the modulated digital baseband signal or digital intermediate frequency signal into a radio frequency signal, and send the radio frequency signal through the one or more antennas 1204. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing and the analog-to-digital conversion processing is adjustable. The transmitter Tx may selectively perform one or more levels of frequency up-mixing processing and digital-to-analog conversion processing on the modulated digital baseband signal or digital medium-frequency signal to obtain the radio frequency signal. A sequence of the frequency up-mixing processing and the digital-to-analog conversion processing is adjustable. The digital baseband signal and the digital intermediate frequency signal may be collectively referred to as digital signals.

It should be understood that the transceiver 1203 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver machine, an input interface, a receiving circuit, or the like. The sending unit may be referred to as a transmitter machine, a transmitter, a transmitter circuit, or the like.

The processor 1201 may be a baseband processor, or may be a central processing unit (central processing unit, CPU). The baseband processor and the CPU may be integrated together or separated from each other. The processor 1201 may be configured to implement various functions for the terminal device, for example, configured to process a communication protocol and communication data; or configured to: control the entire terminal device, execute a software program, and process data of the software program; or configured to assist in completing a computing processing task, for example, graphics and image processing or audio processing. Alternatively, the processor 1201 is configured to implement one or more of the foregoing functions.

In addition, the output device 1206 communicates with the processor 1201, and may display information in a plurality of manners. This is not specifically limited herein.

Specifically, the communication apparatus 120 is configured to perform the method of the terminal device in the foregoing embodiment corresponding to FIG. 2, FIG. 4, FIG. 5, FIG. 6, or FIG. 7. In this case, the transceiver 1203 in the communication apparatus 120 is configured to receive second information from the access network device, where the second information indicates the terminal device to send second location information to the access network device; and the transceiver 1203 is further configured to send the second location information to the access network device. In addition, the processor 1201 in the communication apparatus 120 is configured to determine, based on the second location information, a trigger condition of a registration update procedure.

In a possible implementation, the second location information includes a target location, and the target location is a location that is of the terminal device and that is obtained before the registration update procedure is triggered based on a first reference location and a first distance threshold.

In a possible implementation, a distance between the target location and the first reference location is less than the first distance threshold.

In a possible implementation, the processor 1201 is specifically configured to determine a second reference location based on the target location, where the second reference location is used to trigger the registration update procedure.

In a possible implementation, the second information includes first rule information, the first rule information is used to determine that the target location includes a location of the terminal device when a distance between the terminal device and the first reference location reaches a third distance threshold, and the third distance threshold is less than the first distance threshold. The processor 1201 is further configured to: when determining that the distance between the current location of the terminal device and the first reference location reaches the third distance threshold, determine the current location of the terminal device as the target location.

In a possible implementation, the second information includes first indication information, and the first indication information indicates that a location that is of the terminal device and that is determined after the terminal device receives the first indication information is the target location. The processor 1201 is further configured to determine, as the target location, the location that is of the terminal device and that is determined after receiving the first indication information.

In a possible implementation, the second information includes second rule information, and the second rule information is used to determine that the target location includes each location that is of the terminal device and that is sent by the terminal device to the access network device.

In a possible implementation, the processor 1201 is specifically configured to: control an AS of the terminal device to send the target location to a NAS of the terminal device; and control the NAS of the terminal device to update the first reference location based on the target location, to obtain the second reference location.

In a possible implementation, the second information further includes second indication information, and the second indication information further indicates the AS of the terminal device to send the target location to the NAS of the terminal device.

Specifically, the communication apparatus 120 is configured to perform the method of the terminal device in the embodiment corresponding to FIG. 8. In this case, the transceiver 1203 in the communication apparatus 120 is configured to receive third information from a core network device through the access network device, where the third information indicates the terminal device to send third location information to the core network device through the access network device. In addition, the transceiver 1203 is further configured to send the third location information to the core network device through the access network device. In addition, the processor 1201 is configured to determine a trigger condition of a registration update procedure based on the third location information.

In a possible implementation, the third location information includes a target location, and the target location is a location that is of the terminal device and that is obtained before the registration update procedure is triggered based on a first reference location and a first distance threshold.

In a possible implementation, a distance between the target location and the first reference location is less than the first distance threshold.

In a possible implementation, the processor 1201 is specifically configured to determine a second reference location based on the target location, where the second reference location is used to trigger the registration update procedure.

In a possible implementation, the third information includes third indication information, the third indication information indicates the terminal device to send the target location to the core network device through the access network device, and the target location includes a location determined by the terminal device within a preset time range before the terminal device is released; and the processor 1201 is further configured to: when determining that the terminal device needs to be released, determine the location of the terminal device within the preset time range before the terminal device is released as the target location.

In a possible implementation, the third information includes fourth indication information, and the fourth indication information indicates that a location determined after the terminal device receives the fourth indication information is the target location; and the processor 1201 is further configured to determine, as the target location, the location that is of the terminal device and that is determined after receiving the fourth indication information.

It should be noted that for specific implementations and beneficial effects of this embodiment, refer to the method of the terminal device in the foregoing embodiment. Details are not described herein again.

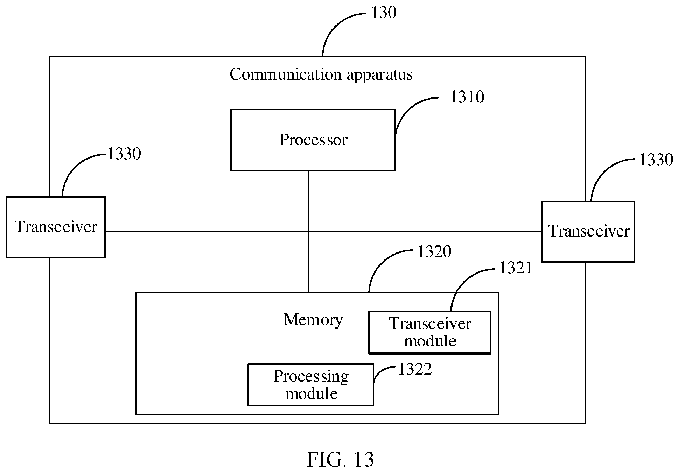

FIG. 13 is a diagram of a structure of another communication apparatus 130 according to an embodiment. It should be understood that the core network device in the method embodiment corresponding to FIG. 2, FIG. 4, FIG. 5, FIG. 6, FIG. 7, FIG. 8, FIG. 9, or FIG. 10 may be based on the structure of the communication apparatus 130 shown in FIG. 130 in this embodiment. As shown in FIG. 13, the communication apparatus 130 may include a processor 1310, a memory 1320, and a transceiver 1330. The processor 1310 is coupled to the memory 1320, and the processor 1310 is coupled to the transceiver 1330.

The transceiver 1330 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver machine, an input interface, a receiving circuit, or the like. The sending unit may be referred to as a transmitter machine, a transmitter, a transmitter circuit, or the like.

The processor 1310 may be a central processing unit (central processing unit, CPU), an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof. The processor 1310 may be one processor, or may include a plurality of processors. This is not specifically limited herein.

The memory 1320 is mainly configured to store a software program and data. The memory 1320 may exist independently, and is connected to the processor 1310. Optionally, the memory 1320 and the processor 1310 may be integrated, for example, integrated into one or more chips. The memory 1320 can store program code for execution of the technical solutions in embodiments of this application, and the processor 1310 controls the execution. Various types of executed computer program code may also be considered as drivers of the processor 1310. The memory 1320 may include a volatile memory (volatile memory), for example, a random access memory (random access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 1320 may alternatively include a combination of the foregoing types of memories. The memory 1320 may be one memory, or may include a plurality of memories. For example, the memory 1320 is configured to store various data, for example, a first reference location and a first distance threshold. In addition, the memory 1320 is further configured to store first rule information, second rule information, third rule information, fourth rule information, and the like. Specifically, refer to the related descriptions in the foregoing embodiments. Details are not described herein again.

In an implementation, the memory 1320 stores computer-readable instructions, and the computer-readable instructions include a plurality of software modules, for example, a transceiver module 1321 and a processing module 1322. After executing each software module, the processor 1310 may perform a corresponding operation as indicated by the software module. In this embodiment, an operation performed by a software module is actually an operation performed by the processor 1310 as indicated by the software module.

Specifically, the communication apparatus 130 is configured to perform the method of the core network device in the embodiment corresponding to FIG. 2, FIG. 4, FIG. 5, FIG. 6, or FIG. 7. In this case, main functions of the transceiver module 1321 and the processing module 1322 in the communication apparatus 130 are as follows:
The transceiver module 1321 is configured to receive first information from the core network device, where the first information indicates an access network device to send first location information of a terminal device to the core network device. The processing module 1322 is configured to determine the first location information. The transceiver module 1321 is further configured to send the first location information to the core network device, where the first location information is used by the core network device to determine a paging area and/or registration area of the terminal device.

In a possible implementation, the first location information includes a target location, and the target location is a location that is of the terminal device and that is obtained before a registration update procedure is triggered based on a first reference location and a first distance threshold.

In a possible implementation, a distance between the target location and the first reference location is less than the first distance threshold.

In a possible implementation, the paging area and/or registration area of the terminal device are/is represented by using a second reference location and/or second distance threshold, and the second reference location and the second distance threshold are determined based on the first location information.

In a possible implementation, the processing module 1322 is specifically configured to: send second information to the terminal device based on the first information, where the second information indicates the terminal device to send second location information to the access network device; and determine the first location information based on the second location information received from the terminal device, where the second location information includes the target location, and the target location is a location that is of the terminal device and that is determined by the terminal device based on the second information.

In a possible implementation, the first information includes first rule information, the first rule information is used to determine that the target location includes a location of the terminal device when a distance between the terminal device and the first reference location reaches a third distance threshold, and the third distance threshold is less than the first distance threshold.

In a possible implementation, the second information includes first indication information, and the first indication information indicates that a location that is of the terminal device and that is determined after the terminal device receives the first indication information is the target location; and the processing module 1322 is specifically configured to: when determining, based on the first rule information, that a distance between the location of the terminal device and the first reference location reaches the third distance threshold, control the transceiver module 1321 to send the second information to the terminal device.

In a possible implementation, the second information includes the first rule information.

In a possible implementation, the first information includes second rule information, the second rule information is used to determine that the target location includes each location that is of the terminal device and that is sent by the terminal device to the access network device, and the second information includes the second rule information. The transceiver module 1321 is specifically configured to receive each location of the terminal device from the terminal device.

In a possible implementation, the first information includes third rule information, and the third rule information is used by the access network device to determine that the target location includes a location that is of the terminal device and that is obtained within a preset time range before the terminal device is released or suspended.

In a possible implementation, the second information includes first indication information, and the first indication information indicates that a location that is of the terminal device and that is determined after the terminal device receives the first indication information is the target location. The processing module 1322 is specifically configured to: when determining, based on the third rule information, that the terminal device needs to be released or suspended, control the transceiver module 1321 to send the second information to the terminal device.

In a possible implementation, the second distance threshold is greater than the first distance threshold.

In a possible implementation, the first information further includes second indication information, the second information further includes the second indication information, and the second indication information further indicates an AS of the terminal device to send the target location to a NAS of the terminal device.

In a possible implementation, the transceiver module 1321 is further configured to receive a first paging message from the core network device, where the first paging message includes the second reference location and/or second distance threshold; the processing module 1322 is further configured to determine, based on the second reference location and/or second distance threshold, a target cell and/or a target beam coverage area in a plurality of cells served by the access network device; and the transceiver module 1321 is further configured to send, to the target cell and/or the target beam coverage area, a second paging message used to page the terminal device.

In a possible implementation, the target location is represented by using geographical location information, and the geographical location information includes longitude and latitude. The processing module 1322 determines, based on a first correspondence and the first location information, a tracking area code TAC corresponding to the first location information, where the first correspondence is a correspondence between a geographic area and the tracking area code TAC.

Specifically, the communication apparatus 130 is configured to perform the method of the core network device in the embodiment corresponding to FIG. 8. In this case, main functions of the transceiver module 1321 and the processing module 1322 in the communication apparatus 130 are as follows:
The transceiver module 1321 is configured to send third information to a terminal device through an access network device that serves the terminal device, where the third information indicates the terminal device to send third location information of the terminal device to the core network device through the access network device. The transceiver module 1321 is further configured to receive the third location information from the terminal device through the access network device. The processing module 1322 is configured to determine a paging area and/or registration area of the terminal device based on the third location information.

In a possible implementation, the third location information includes a target location, and the target location is a location that is of the terminal device and that is obtained before a registration update procedure is triggered based on a first reference location and a first distance threshold.

In a possible implementation, a distance between the target location and the first reference location is less than the first distance threshold.

In a possible implementation, the paging area and/or registration area of the terminal device are/is represented by using a second reference location and/or second distance threshold, and the second reference location and the second distance threshold are determined based on first location information.

In a possible implementation, the second distance threshold is greater than the first distance threshold.

In a possible implementation, the third information includes third indication information, the third indication information indicates the terminal device to send the target location to the core network device through the access network device, and the target location includes a location determined by the terminal device within a preset time range before the terminal device is released.

In a possible implementation, the third information includes fourth indication information, and the fourth indication information indicates that a location determined after the terminal device receives the fourth indication information is the target location.

The transceiver module 1321 is specifically configured to: when determining that the terminal device needs to be released, send the fourth indication information to the terminal device through the access network device.

It should be noted that, for specific implementations and beneficial effects of this embodiment, refer to the method of the core network device in the foregoing embodiment. Details are not described herein again.

In an implementation process, the steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again. It should be further understood that, "first", "second", "third", "fourth", and various numbers in this specification are merely used for differentiation for ease of description, and are not intended to limit the scope of embodiments of this application.

In addition, this application provides a computer program product. The computer program product includes one or more computer instructions. When the computer program instructions are loaded and executed on a computer, all or some of the procedures or functions according to embodiments of this application are generated. For example, the method related to the access network device in FIG. 2, FIG. 4, FIG. 5, FIG. 6, FIG. 7, FIG. 8, FIG. 9, or FIG. 10 is implemented. For another example, the method related to the terminal device in FIG. 2, FIG. 4, FIG. 5, FIG. 6, FIG. 7, FIG. 8, FIG. 9, or FIG. 10 is implemented. For another example, the method related to the core network device in FIG. 2, FIG. 4, FIG. 5, FIG. 6, FIG. 7, FIG. 8, FIG. 9, or FIG. 10 is implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the access network device in FIG. 2, FIG. 4, FIG. 5, FIG. 6, FIG. 7, FIG. 8, FIG. 9, or FIG. 10.

In addition, this application further provides a computer-readable storage medium. The storage medium stores a computer program, and the computer program is executed by a processor to implement the method related to the terminal device in FIG. 2, FIG. 4, FIG. 5, FIG. 6, FIG. 7, FIG. 8, FIG. 9, or FIG. 10.

In addition, this application further provides a computer-readable storage medium. The storage medium stores a computer program, and the computer program is executed by a processor to implement the method related to the core network device in FIG. 2, FIG. 4, FIG. 5, FIG. 6, FIG. 7, FIG. 8, FIG. 9, or FIG. 10.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person skilled in the art can clearly understand that, for a purpose of convenient and brief description, for detailed working processes of the foregoing system, apparatus, and unit, refer to corresponding processes in the foregoing method embodiments. Details are not described herein again.

## Claims

1. An information update method, wherein the method is applied to an access network device, and the method comprises:
receiving first information from a core network device, wherein the first information indicates to send first location information of a terminal device to the core network device;
determining the first location information; and
sending the first location information to the core network device, wherein the first location information is used by the core network device to determine a paging area and/or registration area of the terminal device.

2. The method according to claim 1, wherein the first location information comprises a target location, and the target location is a location that is of the terminal device and that is obtained before a registration update procedure is triggered based on a first reference location and a first distance threshold.

3. The method according to claim 2, wherein a distance between the target location and the first reference location is less than the first distance threshold.

4. The method according to any one of claims 1 to 3, wherein the paging area and/or registration area of the terminal device are/is represented by using a second reference location and/or second distance threshold, and the second reference location and the second distance threshold are determined based on the first location information.

5. The method according to claim 1 or 2, wherein the determining the first location information comprises:
sending second information to the terminal device based on the first information, wherein the second information indicates the terminal device to send second location information to the access network device;
receiving the second location information from the terminal device, wherein the second location information comprises the target location, and the target location is a location that is of the terminal device and that is determined by the terminal device based on the second information; and
determining the first location information based on the second location information.

6. The method according to claim 5, wherein the first information comprises first rule information, the first rule information is used to determine that the target location comprises a location of the terminal device when a distance between the terminal device and the first reference location reaches a third distance threshold, and the third distance threshold is less than the first distance threshold.

7. The method according to claim 6, wherein the second information comprises first indication information, and the first indication information indicates that a location that is of the terminal device and that is determined after the terminal device receives the first indication information is the target location; and
the sending second information to the terminal device based on the first information comprises:
when determining, based on the first rule information, that the distance between the location of the terminal device and the first reference location reaches the third distance threshold, sending the second information to the terminal device.

8. The method according to claim 6, wherein the second information comprises the first rule information.

9. The method according to claim 5, wherein the first information comprises second rule information, the second rule information is used to determine that the target location comprises each location that is of the terminal device and that is sent by the terminal device to the access network device, and the second information comprises the second rule information; and
the receiving the second location information from the terminal device comprises:
receiving each location of the terminal device from the terminal device, and determining each received location of the terminal device as the target location.

10. The method according to claim 5, wherein the first information comprises third rule information, and the third rule information is used by the access network device to determine that the target location comprises a location that is of the terminal device and that is obtained within a preset time range before the terminal device is released or suspended.

11. The method according to claim 10, wherein the second information comprises first indication information, and the first indication information indicates that a location that is of the terminal device and that is determined after the terminal device receives the first indication information is the target location; and
the sending second information to the terminal device based on the first information comprises:
when determining, based on the third rule information, that the terminal device needs to be released or suspended, sending the second information to the terminal device.

12. The method according to any one of claims 1 to 11, wherein the second distance threshold is greater than the first distance threshold.

13. The method according to any one of claims 1 to 12, wherein the first information further comprises second indication information, the second information further comprises the second indication information, and the second indication information further indicates an access stratum AS of the terminal device to send the target location to a non-access stratum NAS of the terminal device.

14. The method according to any one of claims 4 to 13, wherein after the sending the first location information to the core network device, the method further comprises:
receiving a first paging message from the core network device, wherein the first paging message comprises the second reference location and/or second distance threshold;
determining, based on the second reference location and/or second distance threshold, a target cell and/or a target beam coverage area in a plurality of cells served by the access network device; and
sending, to the target cell and/or the target beam coverage area, a second paging message used to page the terminal device.

15. An information update method, wherein the method is applied to a terminal device, and the method comprises:
receiving second information from an access network device, wherein the second information indicates the terminal device to send second location information to the access network device;
sending the second location information to the access network device; and
determining a trigger condition of a registration update procedure based on the second location information.

16. The method according to claim 15, wherein the second location information comprises a target location, and the target location is a location that is of the terminal device and that is obtained before the registration update procedure is triggered based on a first reference location and a first distance threshold.

17. The method according to claim 16, wherein a distance between the target location and the first reference location is less than the first distance threshold.

18. The method according to claim 16 or 17, wherein the determining a trigger condition of a registration update procedure based on the second location information comprises:
determining a second reference location based on the target location, wherein the second reference location is used to trigger the registration update procedure.

19. The method according to any one of claims 16 to 18, wherein the second information comprises first rule information, the first rule information is used to determine that the target location comprises a location of the terminal device when a distance between the terminal device and the first reference location reaches a third distance threshold, and the third distance threshold is less than the first distance threshold; and
the method further comprises:
when a distance between a current location of the terminal device and the first reference location reaches the third distance threshold, determining the current location of the terminal device as the target location.

20. The method according to any one of claims 16 to 18, wherein the second information comprises first indication information, and the first indication information indicates that a location that is of the terminal device and that is determined after the terminal device receives the first indication information is the target location; and
the method further comprises:
determining, as the target location, the location that is of the terminal device and that is determined after receiving the first indication information.

21. The method according to any one of claims 16 to 18, wherein the second information comprises second rule information, and the second rule information is used to determine that the target location comprises each location that is of the terminal device and that is sent by the terminal device to the access network device.

22. The method according to claim 18, wherein the determining, by the terminal device, a second reference location based on the target location comprises:
sending, by an access stratum AS of the terminal device, the target location to a non-access stratum NAS of the terminal device; and
updating, by the NAS of the terminal device, the first reference location based on the target location, to obtain the second reference location.

23. The method according to claim 22, wherein the second information further comprises second indication information, and the second indication information further indicates the AS of the terminal device to send the target location to the NAS of the terminal device.

24. An information update method, wherein the method is applied to a core network device, and the method comprises:
sending first information to an access network device that serves a terminal device, wherein the first information indicates the access network device to send first location information of the terminal device to the core network device;
receiving the first location information from the access network device; and
determining a paging area and/or registration area of the terminal device based on the first location information.

25. The method according to claim 24, wherein the first location information comprises a target location, and the target location is a location that is of the terminal device and that is obtained before a registration update procedure is triggered based on a first reference location and a first distance threshold.

26. The method according to claim 25, wherein a distance between the target location and the first reference location is less than the first distance threshold.

27. The method according to any one of claims 24 to 26, wherein the paging area and/or registration area of the terminal device are/is represented by using a second reference location and/or second distance threshold, and the second reference location and the second distance threshold are determined based on the first location information.

28. The method according to any one of claims 25 to 27, wherein the first information comprises first rule information, the first rule information is used to determine that the target location comprises a location of the terminal device when a distance between the terminal device and the first reference location reaches a third distance threshold, and the third distance threshold is less than the first distance threshold.

29. The method according to any one of claims 25 to 27, wherein the first information comprises second rule information, and the second rule information is used to determine that the target location comprises each location that is of the terminal device and that is sent by the terminal device to the access network device.

30. The method according to any one of claims 25 to 27, wherein the first information comprises third rule information, and the third rule information is used by the access network device to determine that the target location comprises a location that is of the terminal device and that is obtained within a preset time range before the terminal device is released or suspended.

31. The method according to claim 27, wherein the second distance threshold is greater than the first distance threshold.

32. The method according to any one of claims 24 to 31, wherein the first information further comprises second indication information, and the second indication information indicates an AS of the terminal device to send the target location to a NAS of the terminal device.

33. The method according to any one of claims 27 to 32, wherein the method further comprises:
determining, based on the second reference location and/or second distance threshold, a target access network device used to page the terminal device; and
sending a first paging message to the target access network device, wherein the first paging message comprises the second reference location and/or second distance threshold.

34. The method according to claim 33, wherein the second reference location and/or second distance threshold are/is used to determine a first geographic area; and
the determining, based on the second reference location and/or second distance threshold, a target access network device used to page the terminal device comprises:
determining an access network device located in the first geographic area as the target access network device.

35. The method according to claim 33, wherein location change information and at least one of the second reference location and the second distance threshold are used to determine a second geographic area, and the location change information comprises information indicating a movement direction of the terminal device and/or information indicating a movement speed of the terminal device; and
the determining, based on the second reference location and/or second distance threshold, a target access network device used to page the terminal device comprises:
determining an access network device located in the second geographic area as the target access network device.

36. The method according to any one of claims 24 to 35, wherein the target location is represented by using geographical location information, and the geographical location information comprises latitude and longitude; and
after the receiving the first location information from the access network device, the method further comprises:
determining, based on a first correspondence and the first location information, a tracking area code TAC corresponding to the first location information, wherein the first correspondence is a correspondence between a geographic area and the tracking area code TAC.

37. An information update method, wherein the method is applied to a terminal device, and the method comprises:
receiving third information from a core network device through an access network device, wherein the third information indicates the terminal device to send third location information to the core network device through the access network device; and
sending the third location information to the core network device through the access network device, and determining, by the terminal device, a trigger condition of a registration update procedure based on the third location information.

38. The method according to claim 37, wherein the third location information comprises a target location, and the target location is a location that is of the terminal device and that is obtained before the registration update procedure is triggered based on a first reference location and a first distance threshold.

39. The method according to claim 38, wherein a distance between the target location and the first reference location is less than the first distance threshold.

40. The method according to claim 38 or 39, wherein the determining a trigger condition of a registration update procedure based on the third location information comprises:
determining a second reference location based on the target location, wherein the second reference location is used to trigger the registration update procedure.

41. The method according to any one of claims 38 to 40, wherein the third information comprises third indication information, the third indication information indicates the terminal device to send the target location to the core network device through the access network device, and the target location comprises a location determined by the terminal device within a preset time range before the terminal device is released; and
the method further comprises:
when the terminal device determines that the terminal device needs to be released, determining the location of the terminal device within the preset time range before the terminal device is released as the target location.

42. The method according to any one of claims 38 to 40, wherein the third information comprises fourth indication information, and the fourth indication information indicates that a location determined after the terminal device receives the fourth indication information is the target location; and
the method further comprises:
determining, as the target location, the location that is of the terminal device and that is determined after receiving the fourth indication information.

43. An information update method, wherein the method is applied to a core network device, and the method comprises:
sending third information to a terminal device through an access network device that serves the terminal device, wherein the third information indicates the terminal device to send third location information of the terminal device to the core network device through the access network device;
receiving the third location information from the terminal device through the access network device; and
determining a paging area and/or registration area of the terminal device based on the third location information.

44. The method according to claim 43, wherein the third location information comprises a target location, and the target location is a location that is of the terminal device and that is obtained before a registration update procedure is triggered based on a first reference location and a first distance threshold.

45. The method according to claim 44, wherein a distance between the target location and the first reference location is less than the first distance threshold.

46. The method according to any one of claims 43 to 45, wherein the paging area and/or registration area of the terminal device are/is represented by using a second reference location and/or second distance threshold, and the second reference location and the second distance threshold are determined based on the first location information.

47. The method according to claim 46, wherein the second distance threshold is greater than the first distance threshold.

48. The method according to any one of claims 44 to 47, wherein the third information comprises third indication information, the third indication information indicates the terminal device to send the target location to the core network device through the access network device, and the target location comprises a location determined by the terminal device within a preset time range before the terminal device is released.

49. The method according to any one of claims 44 to 47, wherein the third information comprises fourth indication information, and the fourth indication information indicates that a location determined after the terminal device receives the fourth indication information is the target location; and
the sending third information to a terminal device through an access network device that serves the terminal device comprises:
when determining that the terminal device needs to be released, sending, by the core network device, the fourth indication information to the terminal device through the access network device.

50. A communication apparatus, comprising a unit or a module configured to perform the method according to any one of claims 1 to 14.

51. A communication apparatus, comprising a unit or a module configured to perform the method according to any one of claims 15 to 23, or a unit or a module configured to perform the method according to any one of claims 37 to 42.

52. A communication apparatus, comprising a unit or a module configured to perform the method according to any one of claims 24 to 36, or a unit or a module configured to perform the method according to any one of claims 43 to 49.

53. A communication apparatus, comprising a processor and a memory, wherein
the memory stores a computer program; and
the processor invokes the computer program, to enable the communication apparatus to perform the method according to any one of claims 1 to 14.

54. A communication apparatus, comprising a processor and a memory, wherein
the memory stores a computer program; and
the processor invokes the computer program, to enable the communication apparatus to perform the method according to any one of claims 15 to 23; or perform the method according to any one of claims 37 to 42.

55. A communication apparatus, comprising a processor and a memory, wherein
the memory stores a computer program; and
the processor invokes the computer program, to enable the communication apparatus to perform the method according to any one of claims 24 to 36; or perform the method according to any one of claims 43 to 49.

56. A communication system, comprising:
an access network device that performs the method according to any one of claims 1 to 14; and
a core network device that performs the method according to any one of claims 24 to 36.

57. The communication system according to claim 56, wherein the communication system further comprises a terminal device, and the terminal device is configured to perform the method according to any one of claims 15 to 23.

58. A communication system, comprising a terminal device, an access network device, and a core network device, wherein
the terminal device is configured to perform the method according to any one of claims 37 to 42; and
the core network device is configured to perform the method according to any one of claims 43 to 49.

59. A computer-readable storage medium, storing instructions, wherein when the instructions are run on a computer, the computer is enabled to perform the method according to any one of claims 1 to 49.

60. A computer program product, wherein when the computer program product runs on a computer, the computer is enabled to perform the method according to any one of claims 1 to 49.
